(19) Europäisches Patentamt
European Patent Office
Office européen des brevets

(11) EP 1 770 107 A1

(12) EUROPÄISCHE PATENTANMELDUNG

(43) Veröffentlichungstag:
**04.04.2007 Patentblatt 2007/14**

(21) Anmeldenummer: **05109112.2**

(22) Anmeldetag: **30.09.2005**

(51) Int Cl.:
***C08G 18/32*** *(2006.01)* ***C08G 18/10*** *(2006.01)*
***C09D 175/04*** *(2006.01)* ***C09K 3/10*** *(2006.01)*
***C09J 175/04*** *(2006.01)*

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Sika Technology AG**
**6340 Baar (CH)**

(72) Erfinder: **Burckhardt, Urs**
**8057, Zürich (CH)**

(74) Vertreter: **Isler, Jörg et al**
**c/o Sika Technology AG,**
**Tüffenwies 16-22**
**8048 Zürich (CH)**

(54) **Feuchtigkeitshärtende Polyurethanzusammensetzung**

(57) Die vorliegende Erfindung betrifft Zusammensetzungen, welche mindestens ein Isocyanat-haltiges Polyurethanpolymer **P**, welches aus mindestens einem Polyisocyanat und mindestens einem Polyol hergestellt wird, sowie mindestens eine Aldimin-haltige Verbindung der Formel (I) enthält. Die Zusammensetzungen sind lagerstabil und härten unter dem Einfluss von Feuchtigkeit rasch und blasenfrei aus und spalten hierbei keine riechenden Substanzen ab. Die Zusammensetzung, die ausgehärtete Zusammensetzung, sowie die dabei entstehenden Abspaltprodukte sind geruchsfrei. Die Zusammensetzung kann als Kleb-, Dichtstoff oder Beschichtung verwendet werden, welche gute mechanische Eigenschaften und Haftungen haben.

EP 1 770 107 A1

## Beschreibung

### Technisches Gebiet

Die Erfindung betrifft das Gebiet der Aldimine und der feuchtigkeitshärtenden Polyurethanpolymere.

### Stand der Technik

Polyurethanzusammensetzungen stellen Kunststoffvorläufer dar, welche schon seit geraumer Zeit beispielsweise als Klebstoffe, Dichtstoffe, Beschichtungen und Beläge eingesetzt werden. Üblicherweise enthalten sie ein aus Polyolen und Polyisocyanaten hergestelltes, Isocyanat-haltiges Polyurethanpolymer, das mit weiteren Komponenten vermengt und bis zum Gebrauch unter Ausschluss von Feuchtigkeit aufbewahrt wird. Eine derartige Zusammensetzung wird als einkomponentige Zusammensetzung bezeichnet, und härtet unter dem Einfluss von Feuchtigkeit zu einem Kunststoff aus. Diese an sich bekannten Systeme weisen den Nachteil auf, dass es bei ihrer Aushärtung, bedingt durch das bei der Reaktion der Isocyanatgruppen mit Wasser entstehende Kohlendioxid ($CO_2$), zur Bildung von unerwünschten Gasblasen im ausgehärteten Kunststoff kommen kann; dies tritt insbesondere dann auf, wenn die Geschwindigkeit der Aushärtung hoch ist. Zur Unterdrückung der Blasenbildung bei der Aushärtung Isocyanat-haltiger Zusammensetzungen können den Zusammensetzungen blockierte Amine, beispielsweise in Form von Aldiminen, als sogenannte "latente Amine" oder "latente Härter" zugesetzt werden. Bei Kontakt mit Feuchtigkeit hydrolysieren die blockierten Aminogruppen des latenten Härters und reagieren darauf mit den Isocyanatgruppen der Zusammensetzung ohne Freisetzung von $CO_2$. Die Verwendung von Aldiminen als latenten Härtern in isocyanathaltigen Zusammensetzungen wird beispielsweise in US 3,420,800 beschrieben. Die Anwesenheit eines Aldimins birgt allerdings die Gefahr, dass die Zusammensetzung aufgrund von vorzeitig auftretenden Reaktionen zwischen Aldimino- und Isocyanatgruppen nur kurzzeitig oder gar nicht lagerstabil ist.

Aldimine enthaltende isocyanathaltige Zusammensetzungen mit guter Lagerstabilität sind bekannt, wie beispielsweise beschrieben in US 4,469,831, US 4,853,454 und US 5,087,661. WO 2004/013200 A1 beschreibt Polyaldimine enthaltende Zusammensetzungen, welche lagerstabil sind und unter dem Einfluss von Feuchtigkeit geruchsfrei aushärten. Die in den genannten Schriften beschriebenen Zusammensetzungen haben einen Nachteil darin, dass sie zur Aushärtung relativ viel Wasser benötigen, nämlich doppelt soviel, wie wenn das in der Zusammensetzung enthaltene isocyanathaltige Polyurethan polymer ohne den latenten Härter, also durch direkte Reaktion der Isocyanatgruppen mit Wasser, aushärtet. Im Fall der Aushärtung mittels Luftfeuchtigkeit härtet die Zusammensetzung von aussen nach innen, wobei das für die Aushärtungsreaktion benötigte Wasser durch die zunehmend dicker werdende Kunststoffschicht hindurch diffundieren muss; die Verfügbarkeit von Wasser stellt deshalb, zumal bei dickschichtiger Anwendung der Zusammensetzung, schon nach kurzer Zeit den das Fortschreiten der Härtungsreaktion limitierenden Faktor dar. Ein höherer Wasserverbrauch der zur Aushärtung führenden Vernetzungsreaktionen führt daher automatisch zu einer langsameren Aushärtung.

Isocyanat-haltige Zusammensetzungen, welche zur Aushärtung weniger Wasser als die oben erwähnten Systeme benötigen, sind bekannt. So beschreiben US 4,108,842, US 4,404,379 und US 6,136,942 Zusammensetzungen, die Umsetzungsprodukte aus Polyisocyanaten und aminofunktionellen Aldiminen, beziehungsweise Cycloaminalen als tautomerer Form davon, enthalten und die unter dem Einfluss von Feuchtigkeit schnell aushärten und beispielsweise als Klebstoffe, Dichtstoffe oder Beschichtungen eingesetzt werden können. Allerdings weisen die in den erwähnten Schriften beschriebenen Zusammensetzungen eine geringe Lagerstabilität auf. Dies rührt daher, dass die ihn ihnen enthaltenen geschützten Aminogruppen, in Form von Aldimino- oder Cycloaminal-Gruppen, sich gegenüber Isocyanatgruppen nicht vollständig inert verhalten, sondern mit diesen, insbesondere den reaktiven aromatischen Isocyanatgruppen, auch in Abwesenheit von Feuchtigkeit schleichend reagieren und dadurch eine Viskositätserhöhung verursachen, welche die Zusammensetzungen schon nach kurzer Zeit unbrauchbar machen kann. Weiterhin weisen die Zusammensetzungen bei ihrer Anwendung, verursacht durch die bei der Aushärtung - durch Hydrolyse der Aldiminogruppen - freigesetzten Aldehyde, einen störenden Geruch auf und sind deshalb, besonders in Innenräumen, nur eingeschränkt verwendbar. Zusammensetzungen nach US 6,136,942 zeigen in ausgehärteter Form ausserdem Probleme mit der Lichtechtheit.

### Darstellung der Erfindung

Aufgabe der vorliegenden Erfindung ist es daher, Zusammensetzungen zur Verfügung zu stellen, welche lagerstabil sind, unter dem Einfluss von Feuchtigkeit rasch und blasenfrei aushärten, beim Aushärten keine Geruchsbildung verursachen und geeignet sind als Kunststoffvorläufer. Überraschenderweise hat sich gezeigt, dass Aldiminhaltige Verbindungen gemäss Anspruch 1 diese Aufgabe lösen.

Diese Zusammensetzungen weisen eine ausgezeichnete Lagerstabilität auf. Unter dem Einfluss von Feuchtigkeit härten sie ohne Bildung von Blasen und ohne Geruchsbildung rasch aus. Sie eignen sich als Kunststoffvorläufer, insbesondere für die Verwendung als Klebstoffe, Dichtstoffe, Beschichtungen und Beläge, welche auch für Geruchsfreiheit voraussetzende Anwendungen eingesetzt werden können, wie beispielsweise für Verklebungen, Abdichtungen, Beschichtungen oder Bodenbeläge im Innern von Fahrzeugen oder Gebäuden, und welche über ausgezeichnete Eigenschaften verfügen, insbesondere über eine hohe Frühfestigkeit. Weitere Ausführungsformen sind Gegenstand von weiteren unabhängigen Ansprüchen. Weitere vorteilhafte Ausgestaltungen der Erfindung ergeben sich aus den Unteransprüchen.

**Wege zur Ausführung der Erfindung**

Gegenstand der Erfindung sind Zusammensetzungen, welche mindestens ein Isocyanat-haltiges Polyurethanpolymer P sowie mindestens eine Aldimin-haltige Verbindung der Formel (I) enthalten. Das Isocyanat-haltige Polyurethanpolymer P wird hierbei aus mindestens einem Polyisocyanat und mindestens einem Polyol hergestellt.

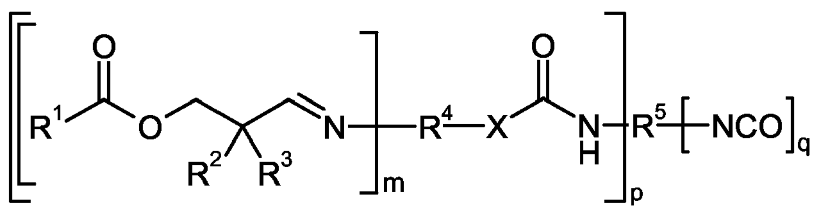 (I)

In Formel (I) steht hierbei m für eine ganze Zahl von 1 bis 4, p für eine ganze Zahl von 1 bis 6 und q für eine ganze Zahl von 0 bis 5, mit der Massgabe, dass die Summe von p und q einen Wert von 2 bis 6 darstellt. Weiterhin steht $R^1$ entweder für einen einwertigen Kohlenwasserstoffrest mit 6 bis 30 C-Atomen, welcher gegebenenfalls mindestens ein Heteroatom, insbesondere in Form von Ether-Sauerstoff, aufweist, oder $R^1$ steht für einen Substituenten der Formel (II).

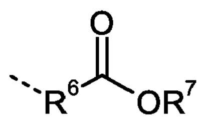 (II)

Hierbei steht $R^6$ für einen zweiwertigen Kohlenwasserstoffrest mit 2 bis 20 C-Atomen, welcher gegebenenfalls mindestens ein Heteroatom, insbesondere in Form von Ether-Sauerstoff, aufweist. $R^7$ steht für einen einwertigen Kohlenwasserstoffrest mit 1 bis 20 C-Atomen.

Weiterhin stehen $R^2$ und $R^3$ entweder für zwei voneinander unabhängige Substituenten, die jeweils einen einwertigen Kohlenwasserstoffrest mit 1 bis 12 C-Atomen darstellen, oder aber sie bilden zusammen einen einzigen Substituenten, der einen zweiwertigen Kohlenwasserstoffrest mit 4 bis 20 C-Atomen darstellt, welcher Teil eines carbocyclischen Rings mit 5 bis 8, bevorzugt 6, C-Atomen, ist. Dieser carbocyclische Ring kann allenfalls substituiert sein. Weiterhin steht $R^4$ für einen (m+1)-wertigen Kohlenwasserstoffrest mit 2 bis 12 C-Atomen, welcher gegebenenfalls mindestens ein Heteroatom, insbesondere in Form von Ether-Sauerstoff oder tertiärem Amin-Stickstoff, enthält.

Weiterhin steht $R^5$ entweder für einen (p+q)-wertigen organischen Rest. Ein derartiger Rest enthält gegebenenfalls Heteroatome und kann durch Entfernung von p+q NCO-Gruppen aus $R^5$-$[NCO]_{p+q}$ erhalten werden. Oder $R^5$ steht für N, $NR^{14}$, O, OC(O)O, Si, $P(O)O_3$ oder $SO_2$. Hierbei steht der $R^{14}$ für einen einwertigen Kohlenwasserstoffrest mit 1 bis 20 C-Atomen.

Des Weiteren steht X für O, S oder N-$R^8$, wobei hierbei $R^8$ entweder für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureestergruppe aufweist, steht, oder für einen Substituenten der Formel (III) steht.

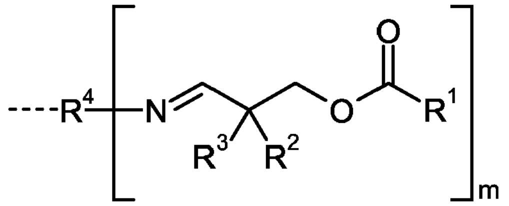

(III),

Die gestrichelten Linien in den Formeln stellen die Bindungen zu den angebenen Substituenten dar.

Die Aldimin-haltige Verbindung der Formel (I) ist herstellbar durch die Umsetzung von mindestens einem Aldimin der Formel (XI) enthaltend einen aktiven Wasserstoff mit mindestens einem Polyisocyanat D. Die den aktiven Wasserstoff tragende Reaktivgruppe des Aldimins der Formel (XI) reagiert dabei in einer Additionsreaktion mit einer oder mehreren Isocyanatgruppe des Polyisocyanates D zu einer im Folgenden auch "Additionsprodukt" genannten Aldimin-haltigen Verbindung der Formel (I). Der Begriff "aktiver Wasserstoff' bezeichnet im vorliegenden Dokument ein deprotonierbares, an ein Stickstoff-, Sauerstoff- oder Schwefelatom gebundenes Wasserstoffatom. Der Begriff "Reaktivgruppe enthaltend einen aktiven Wasserstoff" bezeichnet eine einen aktiven Wasserstoff aufweisende funktionelle Gruppe, insbesondere eine primäre oder sekundäre Aminogruppe, eine Hydroxylgruppe, eine Mercaptogruppe oder eine Harnstoffgruppe. Attribute von Substanzen wie "Aldimin-haltig" oder "Isocyanat-haltig" weisen darauf hin, dass die bezeichneten funktionellen Gruppen, also Aldiminogruppen oder Isocyanatgruppen, in den Substanzen enthalten sind. Die Vorsilbe "Poly" in Substanzbezeichnungen, wie "Polyaldimin", "Polyamin", "Polyisocyanat" oder "Polyol" weist im vorliegenden Dokument darauf hin, dass die jeweilige Substanz formal mehr als eine der in ihrer Bezeichnung vorkommenden funktionellen Gruppe pro Molekül enthält.

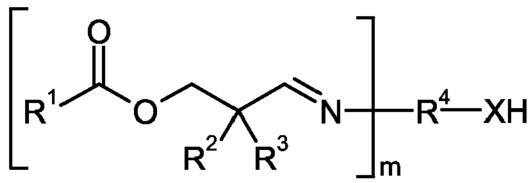

(XI)

$R^1$, $R^2$, $R^3$, $R^4$ und X sowie m haben die bereits für die Aldimin-haltige Verbindung der Formel (I) offenbarten Bedeutungen.

Das Aldimin der Formel (XI) ist herstellbar aus mindestens einem sterisch gehinderten aliphatischen Aldehyd **A** und mindestens einem aliphatischen Amin **B,** entsprechend der Formel $[H_2N]_m$-$R^4$-XH, welches neben einer oder mehreren primären Aminogruppen noch eine weitere Reaktivgruppe enthaltend einen aktiven Wasserstoff aufweist.

Die Umsetzung zwischen dem Aldehyd **A** und dem Amin **B** erfolgt in einer Kondensationsreaktion unter Abspaltung von Wasser. Solche Kondensationsreaktionen sind bestens bekannt und beschrieben, beispielsweise in Houben-Weyl, "Methoden der organischen Chemie", Vol. XI/2, Seite 73ff. Der Aldehyd **A** wird hierbei in Bezug auf die primären Aminogruppen des Amins **B** stöchiometrisch oder in stöchiometrischem Überschuss eingesetzt. Üblicherweise werden solche Kondensationsreaktionen in Anwesenheit eines Lösemittels durchgeführt, mittels welchem das bei der Reaktion entstehende Wasser azeotrop entfernt wird. Zur Herstellung der Aldimine der Formel (XI) wird jedoch ein Herstellverfahren ohne Verwendung von Lösemitteln bevorzugt, wobei das bei der Kondensation gebildete Wasser direkt mittels Anlegen von Vakuum aus der Reaktionsmischung entfernt wird. Durch die lösemittelfreie Herstellung erübrigt sich ein Abdestillieren des Lösemittels nach erfolgter Herstellung, was den Herstellungsprozess vereinfacht. Zudem ist das Aldimin so frei von Lösemittelrückständen, welche einen störenden Geruch verursachen könnten.

Für die Herstellung des Aldimins der Formel (XI) wird mindestens ein sterisch gehinderter aliphatischer Aldehyd **A** der Formel (IV) eingesetzt.

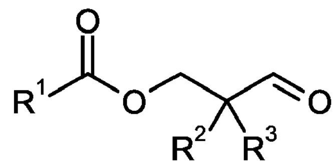 (IV)

In der Formel (IV) haben $R^1$, $R^2$ und $R^3$ die gleiche Bedeutung wie für Formel (I) beschrieben.

Der Aldehyd **A** ist geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Der Aldehyd **A** wird beispielsweise hergestellt aus einer Carbonsäure $R^1$-COOH und einem β-Hydroxyaldehyd der Formel (V) in einer Veresterungsreaktion. Diese Veresterung kann nach bekannten Methoden erfolgen, beschrieben beispielsweise in Houben-Weyl, "Methoden der organischen Chemie", Vol. VIII, Seiten 516-528. Der β-Hydroxyaldehyd der Formel (V) wird beispielsweise in einer gekreuzten Aldol-Addition aus Formaldehyd (oder oligomeren Formen von Formaldehyd, wie Paraformaldehyd oder 1,3,5-Trioxan) und einem Aldehyd der Formel (VI) erhalten.

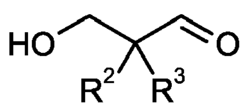 (V)

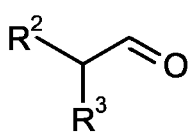 (VI)

In den Formeln (V) und (VI) haben $R^2$ und $R^3$ die gleiche Bedeutung wie für Formel (I) beschrieben.

Die Herstellung des Aldehyds **A** erfolgt bevorzugt lösemittelfrei. Dabei wird der β-Hydroxyaldehyd der Formel (V) ohne Verwendung von Lösemitteln direkt mit der Carbonsäure umgesetzt, wobei das bei der Veresterung gebildete Wasser im Vakuum entfernt wird. Es ist weiterhin bevorzugt, die zum Aldehyd **A** führenden Aldol- und Veresterungsreaktionen aus den Grundstoffen in einem gemeinsamen Prozessschritt, als Eintopfreaktion, auszuführen.

Als geeignete Carbonsäuren $R^1$-COOH zur Veresterung mit den β-Hydroxyaldehyden der Formel (V) seien beispielsweise die folgenden erwähnt: gesättigte aliphatische Carbonsäuren wie Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure; arlyaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden.

Bevorzugt sind Caprylsäure, Caprinsäure, Laurinsäure, Myristinsäure, Palmitinsäure, Stearinsäure, Ölsäure, Linolsäure, Linolensäure, die Isomeren dieser Säuren sowie technische Gemische von Fettsäuren, welche diese Säuren enthalten. Besonders bevorzugt ist Laurinsäure.

Geeignete Aldehyde der Formel (VI) zur Umsetzung mit Formaldehyd zu β-Hydroxyaldehyden der Formel (V) sind beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd und Diphenylacetaldehyd. Bevorzugt ist Isobutyraldehyd.

Geeignete β-Hydroxyaldehyde der Formel (V) sind beispielsweise die Produkte aus der Umsetzung von Formaldehyd mit den vorgängig als geeignet genannten Aldehyden der Formel (VI). Bevorzugt ist 3-Hydroxypivalaldehyd.

Das Amin B ist ein aliphatisches Amin, welches neben einer oder mehreren primären Aminogruppen noch eine weitere Reaktivgruppe, welche einen aktiven Wasserstoff enthält, aufweist. Der Begriff "primäre Aminogruppe" bezeichnet im vorliegenden Dokument eine $NH_2$-Gruppe, die an einen organischen Rest gebunden ist, während der Begriff "sekundäre Aminogruppe" eine NH-Gruppe bezeichnet, die an zwei organische Reste gebunden ist. Der Begriff "aliphatisches Amin" bezeichnet Verbindungen, die mindestens eine Aminogruppe enthalten, die an einen aliphatischen, cycloaliphatischen oder arylaliphatischen Rest gebunden ist. Sie unterscheiden sich damit von den aromatischen Aminen, in welchen die Aminogruppe direkt an einen aromatischen Rest gebunden ist, wie beispielsweise in Anilin oder 2-Aminopyridin.

Als Amine **B** eignen sich beispielsweise die im Folgenden genannten Verbindungen:

- aliphatische Hydroxyamine wie 2-Aminoethanol, 2-Methylaminoethanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol; eine primäre Aminogruppe tragende Derivate von Glykolen wie Diethylenglykol, Dipropylenglykol, Dibutylenglykol und höheren Oligomeren und Polymeren dieser Glykole, beispielsweise 2-(2-Aminoethoxy)-ethanol, Triethylenglykol-monoamin, $\alpha$-(2-Hydroxymethylethyl)-$\omega$-(2-aminomethylethoxy)-poly(oxy(methyl-1,2-ethandiyl)); eine Hydroxylgruppe und eine oder mehrere primäre Aminogruppen tragende Derivate von polyalkoxylierten drei- oder höherwertigen Alkoholen oder von polyalkoxylierten Diaminen; Produkte aus der einfachen Cyanoethylierung und anschliessender Hydrierung von Glykolen, beispielsweise 3-(2-Hydroxyethoxy)-propylamin, 3-(2-(2-Hydroxyethoxy)-ethoxy)-propylamin, 3-(6-Hydroxyhexyloxy)-propylamin;
- aliphatische Mercaptoamine wie 2-Aminoethanthiol (Cysteamin), 3-Aminopropanthiol, 4-Amino-1-butanthiol, 6-Amino-1-hexanthiol, 8-Amino-1-octanthiol, 10-Amino-1-decanthiol, 12-Amino-1-dodecanthiol; Aminothiozucker wie 2-Amino-2-deoxy-6-thioglucose;
- zwei- oder mehrwertige aliphatische Amine, welche neben einer oder mehreren primären Aminogruppen eine sekundäre Aminogruppe tragen, wie N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-Aminoethyl-piperazin, Diethylentriamin (DETA), Bis-hexamethylentriamin (BHMT); Di- und Triamine aus der Cyanoethylierung oder Cyanobutylierung von primären Mono- und Diaminen, beispielsweise N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin, 3-Methylamino-1-pentylamin,3-Ethylamino-1-pentylamin,3-Butylamino-1-pentylamin, 3-Hexylamino-1-pentylamin, 3-(2-Ethylhexyl)amino-1-pentylamin,3-Dodecylamino-1-pentylamin,3-Cyclohexylamino-1-pentylamin, Dipropylentriamin (DPTA), N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin,und Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-($C_{16-22}$-Alkyl)-1,3-propandiamin, wie sie beispielsweise unter dem Handelsnamen Duomeen® von Akzo Nobel erhältlich sind; die Produkte aus der Michael-artigen Addition von aliphatischen primären Di- oder Polyaminen mit Acrylnitril, Malein- oder Fumarsäurediestern, Citraconsäurediestern, Acryl- und Methacrylsäureestern und Itaconsäurediestern, umgesetzt im Molverhältnis 1:1;
- trisubstituierte Harnstoffe, welche eine oder mehrere primäre Aminogruppen tragen, wie N-(2-Aminoethyl)-ethylenharnstoff, N-(2-Aminoethyl)-propylenharnstoff oder N-(2-Aminoethyl)-N'-methylharnstoff.

Insbesondere geeignete aliphatische Hydroxy- und Mercaptoamine sind solche, in denen die primäre Aminogruppe von der Hydroxyl- beziehungsweise der Mercaptogruppe durch eine Kette von mindestens 5 Atomen, oder durch einen Ring, getrennt sind, wie beispielsweise in 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, $\alpha$-(2-Hydroxymethylethyl)-$\omega$-(2-aminomethylethoxy)-poly(oxy(methyl-1,2-ethandiyl)), 3-(2-Hydroxyethoxy)-propylamin, 3-(2-(2-Hydroxyethoxy)-ethoxy)-propylamin, 3-(6-Hydroxyhexyloxy)-propylamin, 6-Amino-1-hexanthiol, 8-Amino-1-octanthiol, 10-Amino-1-decanthiol und 12-Amino-1-dodecanthiol.

Als Amine **B** bevorzugt sind zwei- oder mehrwertige aliphatische Amine, welche neben einer oder mehreren primären Aminogruppen eine sekundäre Aminogruppe tragen, insbesondere N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, DETA, DPTA, BHMT und Fettdiamine wie N-Cocoalkyl-1,3-propandiamin, N-Oleyl-1,3-propandiamin, N-Soyaalkyl-1,3-propandiamin und N-Talgalkyl-1,3-propandiamin. Bevorzugt sind auch aliphatische Hydroxy- und Mercaptoamine, in denen die primäre Aminogruppe von der Hydroxyl- beziehungsweise der Mercaptogruppe durch eine Kette von mindestens 5 Atomen, oder

durch einen Ring, getrennt sind, insbesondere 5-Amino-1-pentanol, 6-Amino-1-hexanol und höhere Homologe davon, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin und höhere Oligo- und Polymere davon, 3-(2-Hydroxyethoxy)-propylamin, 3-(2-(2-Hydroxyethoxy)-ethoxy)-propylamin sowie 3-(6-Hydroxyhexyloxy)-propylamin.

Die Umsetzung zwischen einem Aldehyd **A** und einem Amin **B** führt dabei zu Hydroxyaldiminen, wenn als Amin **B** ein Hydroxyamin eingesetzt wird; zu Mercaptoaldiminen, wenn als Amin **B** ein Mercaptoamin eingesetzt wird; zu Aminoaldiminen, wenn als Amin **B** ein zwei- oder mehrwertiges Amin, welches neben einer oder mehreren primären Aminogruppen eine oder mehrere sekundäre Aminogruppen trägt, eingesetzt wird; oder zu Harnstoffaldiminen, wenn als Amin **B** ein trisubstituierter Harnstoff, welcher eine oder mehrere primäre Aminogruppen trägt, eingesetzt wird.

In einer Ausführungsform weisen die Aldimine der Formel (XI) einen Substituenten N-$R^8$ als Substituenten X auf. Derartige Aldimine der Formel (XI) lassen sich dadurch herstellen, dass mindestens ein sterisch gehinderter aliphatischer Aldehyd **A** der Formel (IV) mit mindestens einem zwei- oder mehrwertigen aliphatischen primären Amin **C** der Formel $[H_2N]_m$-$R^4$-$NH_2$ in einem ersten Schritt zu einem Zwischenprodukt der Formel (VII) umgesetzt wird, welches neben einer oder mehreren Aldiminogruppen noch eine primäre Aminogruppe enthält, und dieses Zwischenprodukt anschliessend in einem zweiten Schritt in einer Additionsreaktion mit einem Michael-Akzeptor der Formel (VIII) in einem Verhältnis der Anzahl Doppelbindungen : Anzahl $NH_2$-Gruppen = 1:1 umgesetzt wird. Dabei entsteht ein Aminoaldimin, welches neben einer oder mehreren Aldiminogruppen noch mindestens eine, bevorzugt genau eine, sekundäre Aminogruppe enthält.

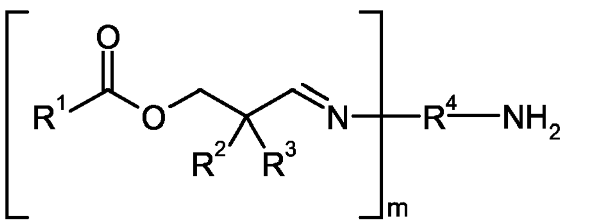
(VII)

In der Formel (VII) haben m, $R^1$, $R^2$, $R^3$ und $R^4$ die gleiche Bedeutung wie für Formel (I) beschrieben.

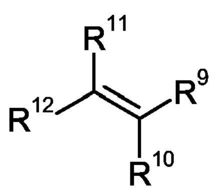
(VIII)

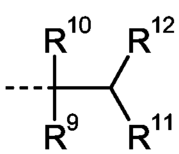
(IX)

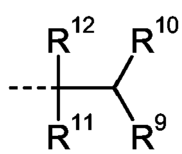
(IX')

Somit entstehen Aldimine der Formel (XI), bei welchen X für den Resten N-$R^8$ steht, und $R^8$ ein einwertiger Kohlenwasserstoffrest der Formel (IX) oder (IX') darstellt. In den Formeln (VIII), (IX) und (IX') stehen hierbei $R^9$ für einen Rest, welcher ausgewählt ist aus der Gruppe bestehend aus -$COOR^{13}$, -CN, -$NO_2$, -$PO(OR^{13})_2$, -$SO_2R^{13}$ und -$SO_2OR^{13}$ und $R^{10}$ für ein Wasserstoffatom oder einen Rest aus der Gruppe bestehend aus -$R^{13}$, -$COOR^{13}$ und -$CH_2COOR^{13}$ und $R^{11}$ und $R^{12}$ unabhängig voneinander für ein Wasserstoffatom oder einen Rest aus der Gruppe bestehend aus -$R^{13}$, -$COOR^{13}$ und -CN, wobei $R^{13}$ für einen einwertigen Kohlenwasserstoffrest mit 1 bis 20 C-Atomen steht.

Das Amin **C** ist ein aliphatisches Amin mit mindestens zwei primären Aminogruppen.

Beispiele für geeignete Amine **C** sind aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 2-Butyl-2-ethyl-1,5-pentandiamin, 1,6-Hexamethylendiamin (HMDA), 2,2,4- und 2,4,4-Trimethylhexamethylendiamin und Mischungen davon (TMD), 1,7-Heptandiamin, 1,8-Octandiamin, 2,4-Dimethyl-1,8-octandiamin, 4-Aminomethyl-1,8-octandiamin, 1,9-Nonandiamin, 2-Methyl-1,9-nonandiamin, 5-Methyl-1,9-nonandiamin, 1,10-Decandiamin, Isodecandiamin, 1,11-Undecandiamin, 1,12-Dodecandiamin, Methyl-bis-(3-aminopropyl)amin, 1,5-Diamino-2-methylpentan (MPMD), 1,3-Diaminopentan(DAMP), 2,5-Dimethyl-1,6-hexamethylendiamin; cycloaliphatische Polyamine wie 1,2-, 1,3- und 1,4-Diaminocyclohexan, Bis-(4-aminocyclohexyl)-methan ($H_{12}$MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1,3,5-Tris-(aminomethyl)-cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.$0^{2,6}$]decan, 1,4-Diamino-2,2,6-trimethylcyclohexan (TMCDA), 3,9-Bis-(3-aminopropyl)-2,4,8,10-tetraoxaspiro[5.5]undecan; arylaliphatische Polyamine wie 1,3-Xylylendiamin (MXDA), 1,4-Xylylendiamin (PXDA), 1,3,5-Tris-(aminomethyl)benzol, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon; Polyoxyalkylen-Polyamine mit theoretisch zwei oder drei Aminogruppen, erhältlich beispielsweise unter dem Namen Jeffamine® (hergestellt von Huntsman Chemicals). Bevorzugt sind Di- oder Triamine, in denen die primären Aminogruppen durch eine Kette von mindestens 5 Atomen, oder durch einen Ring, getrennt sind, insbesondere 1,5-Diamino-2-methylpentan, 1,6-Hexamethylendiamin, 2,2,4- und 2,4,4-Trimethylhexamethylendiamin und Mischungen davon, 1,10-Decandiamin, 1,12-Dodecandiamin, 1,3- und 1,4-Diaminocyclohexan, Bis-(4-aminocyclohexyl)-methan, Bis-(4-amino-3-methylcyclohexyl)-methan, 1-Amino-3-aminomethyl-3,5,5-trimethylcyclohexan, 1,3- und 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo [5.2.1.$0^{2,6}$]decan, 1,4-Diamino-2,2,6-trimethylcyclohexan (TMCDA), 3,9-Bis-(3-aminopropyl)-2,4,8,10-tetraoxaspiro [5.5]undecan, 1,3- und 1,4-Xylylendiamin, 1,3,5-Tris-(aminomethyl)benzol sowie Polyoxyalkylen-Polyamine mit theoretisch zwei oder drei Aminogruppen, erhältlich beispielsweise unter dem Namen Jeffamine® (hergestellt von Huntsman Chemicals).

Beispiele für geeignete Michael-Akzeptoren der Formel (VIII) sind Malein- oder Fumarsäurediester wie Dimethylmaleinat, Diethylmaleinat, Dibutylmaleinat, Diethylfumarat; Citraconsäurediester wie Dimethylcitraconat; Acryl- oder Methacrylsäureester wie Methyl(meth)acrylat, Ethyl(meth)acrylat, Butyl(meth)acrylat, Lauryl(meth)acrylat, Stearyl(meth)acrylat, Tetrahydrofuryl-(meth)acrylat, Isobornyl(meth)acrylat; Itaconsäurediester wie Dimethylitaconat; Zimtsäureester wie Methylcinnamat; Vinylphosphonsäurediester wie Vinylphosphonsäuredimethylester; Vinylsulfonsäureester, insbesondere Vinylsulfonsäurearylester; Vinylsulfone; Vinylnitrile wie Acrylnitril, 2-Pentennitril oder Fumaronitril; 1-Nitroethylene wie β-Nitrostyrol; und Knoevenagel-Kondensationsprodukte, wie beispielsweise solche aus Malonsäurediestern und Aldehyden wie Formaldehyd, Acetaldehyd oder Benzaldehyd. Bevorzugt sind Maleinsäurediester, Acrylsäureester, Phosphonsäurediester und Vinylnitrile.

Die Umsetzung des Aldehyds **A** mit dem Amin **C** zum Zwischenprodukt der Formel (VII) erfolgt in einer Kondensationsreaktion unter Abspaltung von Wasser, wie sie weiter oben für die Umsetzung des Aldehyds **A** mit dem Amin **B** beschrieben wird. Die Stöchiometrie zwischen dem Aldehyd **A** und dem Amin **C** wird dabei so gewählt, dass m mol Aldehyd **A** für 1 mol Amin **C,** welches m+1 mol primäre Aminogruppen enthält, eingesetzt werden. Es wird ein lösemittelfreies Herstellverfahren bevorzugt, wobei das bei der Kondensation gebildete Wasser mittels Anlegen von Vakuum aus der Reaktionsmischung entfernt wird.

Die Umsetzung des Zwischenprodukts der Formel (VII) mit dem Michael-Akzeptor der Formel (VIII) erfolgt beispielsweise dadurch, dass das Zwischenprodukt mit einer stöchiometrischen oder leicht überstöchiometrischen Menge des Michael-Akzeptors der Formel (VIII) gemischt wird und die Mischung bei Temperaturen von 20 bis 110°C bis zum vollständigen Umsatz des Zwischenprodukts zum Aldimin der Formel (XI) erwärmt wird. Die Umsetzung erfolgt bevorzugt ohne eine Verwendung von Lösemitteln.

Die Aldimine der Formel (XI) können gegebenenfalls im Gleichgewicht stehen mit cyclischen Formen, wie sie in Formel (X) beispielhaft gezeigt sind. Diese cyclischen Formen sind im Fall von Aminoaldiminen cyclische Aminale, beispielsweise Imidazolidine oder Tetrahydropyrimidine; im Fall von Hydroxyaldiminen cyclische Aminoacetale, beispielsweise Oxazolidine oder Tetrahydrooxazine; im Fall von Mercaptoaldiminen cyclische Thioaminale, beispielsweise Thiazolidine oder Tetrahydrothiazine.

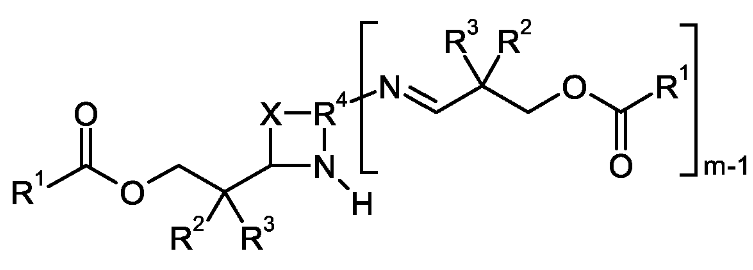 (X)

In der Formel (X) haben m, $R^1$, $R^2$, $R^3$, $R^4$ und X die gleiche Bedeutung wie für Formel (1) beschrieben.

Überraschenderweise neigen die meisten Aldimine der Formel (XI) nicht zur Cyclisierung. Insbesondere für Aminoaldimine kann mittels IR- und NMR-spektroskopischen Methoden gezeigt werden, dass diese Verbindungen überwiegend in der offenkettigen, also der Aldimin-Form, vorliegen, während die cyclische, also die Aminal-Form, nicht oder nur in Spuren vorkommt. Dies steht im Gegensatz zum Verhalten der Aminoaldimine nach dem Stand der Technik, wie sie beispielsweise in US 4,404,379 und US 6,136,942 beschrieben werden: jene liegen nämlich hauptsächlich in der Cycloaminal-Form vor. Auch Hydroxy- und Mercaptoamine, in denen die primäre Aminogruppe von der Hydroxy-beziehungsweise der Mercaptogruppe durch eine Kette von mindestens 5 Atomen, oder durch einen Ring, getrennt sind, zeigen kaum Cyclisierung. Die weitgehende Abwesenheit cyclischer Strukturen in den Aldiminen der Formel (XI) ist, insbesondere im Hinblick auf deren Verwendung in Isocyanat-haltigen Zusammensetzungen, als Vorteil zu werten, da die Aldimine dadurch weitgehend frei sind von den in Aminalen, Oxazolidinen und Thioaminalen vorkommenden basischen Stickstoffatomen, welche die Lagerstabilität der Isocyanat-haltigen Zusammensetzung herabsetzen könnten.

Die Aldimine der Formel (XI) sind geruchsfrei. Sie sind unter geeigneten Bedingungen, insbesondere unter Ausschluss von Feuchtigkeit, lagerstabil. Bei Zutritt von Feuchtigkeit können die Aldiminogruppen der Aldimine über Zwischenstufen formal zu Aminogruppen hydrolysieren, wobei der entsprechende, zur Herstellung des Aldimins verwendete Aldehyd **A** freigesetzt wird. Da diese Hydrolysereaktion reversibel ist und das chemische Gleichgewicht deutlich auf der Aldiminseite liegt, ist davon auszugehen, dass in Abwesenheit von gegenüber Aminen reaktiven Gruppen nur ein Teil der Aldiminogruppen teilweise oder ganz hydrolysieren.

Als Polyisocyanat **D** geeignet sind zwei- oder mehrwertige, mono- und/oder oligomere aliphatische, cycloaliphatische, arylaliphatische und aromatische Polyisocyanate der Formel (XII)

$$\left[OCN\right]_p\!-\!R^5\!-\!\left[NCO\right]_q \qquad \text{(XII)},$$

wie beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), 1,3,5-Tris-(isocyanatomethyl)-benzol, m- und p-Tetramethyl-1,3- und - 1,4-xylylendiisocyanat (m- und p-TMXDI), Bis-(1-Isocyanato-1-methylethyl)-naphthalin, α,α,α',α',α",α"-Hexamethyl-1,3,5-mesitylentriisocyanat, Dimer- und Trimerfettsäureisocyanate wie 3,6-Bis-(9-isocyanatononyl)-4,5-di-(1-heptenyl)-cyclohexen (Dimeryldiisocyanat), 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat,2,3,5,6-Tetramethyl-1,4-diisocyanatobenzol, Naphthalin-1,5-diisocyanat (NDI), 3,3'-Dimethyl-4,4'-diisocyanatodiphenyl (TODI), Tris-(4-isocyanatophenyl)-methan, Tris-(4-isocyanatophenyl)-thiophosphat; Oligomere dieser Isocyanate enthaltend Uretdion-,Isocyanurat- oder Iminooxadiazindiongruppen; modifizierte zwei- und mehrwertige Isocyanate enthaltend Ester-,Harnstoff-,Urethan-,Biuret-,Allophanat-, Carbodiimid-,Uretonimin-oder Oxadiazintriongruppen; sowie Isocyanat-haltige Polyurethanpolymere, das heisst mehr als eine Isocyanatgruppe aufweisende Umsetzungsprodukte von Polyisocyanaten mit zwei- oder mehr Hydroxylgruppen aufweisenden Substanzen (sogenannten "Polyolen"), wie beispielsweise zwei- oder mehrwertigen Alkoholen, Glykolen oder Aminoalkoholen, polyhydroxyfunktionellen Polyethern, Polyestern, Polyacrylaten, Polycarbonaten oder Polykohlenwasserstoffen, insbesondere Polyethern.

Die Umsetzung zwischen dem Aldimin der Formel (XI) und dem Polyisocyanat **D** zum Additionsprodukt der Formel (I) erfolgt unter bekannten Bedingungen, wie sie für Reaktionen zwischen den an der jeweiligen Umsetzung beteiligten Reaktivgruppen typischerweise verwendet werden, beispielsweise bei 20 bis 100°C. Die Umsetzung erfolgt unter Verwendung eines Lösemittels oder bevorzugt lösemittelfrei. Gegebenenfalls können Hilfsstoffe wie beispielsweise Katalysatoren, Initiatoren oder Stabilisatoren mitverwendet werden. Die Umsetzung wird für Aminoaldimine bevorzugt bei Raumtemperatur und ohne Katalysator, für Hydroxy-, Mercapto- und Harnstoffaldimine bei 40 bis 100°C und unter Verwendung eines Katalysators, wie er für die Urethanisierungsreaktion zwischen Isocyanaten und Alkoholen verwendet wird, beispielsweise einer Organozinn-Verbindung, eines Bismutkomplexes, einer tertiären Aminverbindung oder einer Kombination solcher Katalysatoren, durchgeführt.

Wird die Additionsreaktion zwischen dem Aldimin der Formel (XI) und dem Polyisocyanat **D** zu einer Aldiminhaltigen Verbindung der Formel (I) stöchiometrisch geführt, das heisst mit einem Molequivalent aktiven Wasserstoff des Aldimins auf ein Molequivalent Isocyanatgruppen des Polyisocyanats **D** - wodurch deren Reaktivgruppen vollständig

umgesetzt werden -, wird als Additionsprodukt der Formel (I) ein Polyaldimin erhalten. Auf einfache Weise werden so vielfältige Polyaldimine erhalten, ohne dass zu ihrer Herstellung auf die entsprechenden primären Polyamine, welche technisch und kommerziell nur beschränkt zur Verfügung stehen, zurückgegriffen werden müsste. In Abhängigkeit von Struktur, Funktionalität und Molekulargewicht des Polyisocyanates **D** und der Aldimine der Formel (XI) können diese Polyaldimine höchst unterschiedliche Eigenschaften aufweisen; sie lassen sich also auf die Bedürfnisse einer bestimmten Anwendung massschneidern.

Wird die Additionsreaktion zwischen dem Aldimin der Formel (XI) und dem Polyisocyanat **D** hingegen unterstöchiometrisch geführt, das heisst mit weniger als einem Molequivalent aktiven Wasserstoff des Aldimins auf ein Molequivalent Isocyanatgruppen des Polyisocyanats - wodurch die Isocyanatgruppen nur teilweise umgesetzt werden -, wird als Additionsprodukt eine heterofunktionelle Verbindung erhalten, das heisst eine Verbindung der Formel (I), die neben einer oder mehreren Aldiminogruppen noch eine oder mehrere Isocyanatgruppen aufweist. Dies zeigt sich darin, dass der Wert für den Index $q > 0$ ist.

Die auf die beschriebene Weise erhaltenen Additionsprodukte von Aldiminen der Formel (XI) mit Polyisocyanaten **D,** d.h. die Aldimin-haltigen Verbindungen der Formel (I), sind, wie die Aldimine der Formel (XI), geruchsfrei. Sie sind unter geeigneten Bedingungen, insbesondere unter Ausschluss von Feuchtigkeit, lagerstabil.

Die Aldimine der Formel (XI) sowie die Aldimin-haltigen Verbindungen der Formel (I) lassen sich sehr breit verwenden. Grundsätzlich lassen sie sich überall dort einsetzen, wo sie als Quelle der Aldehyde der Formel (IV) und/ oder der Amine **B** dienen können. Insbesondere können sie in der Funktion von geschützten Aminen, beziehungsweise geschützten Aldehyden, in Aldehyd- und/oder Amin-reaktiven Systemen eingesetzt und dort bei Bedarf gezielt entschützt werden. Insbesondere finden sie in Systemen Anwendungen, in welchen Verbindungen vorhanden sind, welche mit primären Aminen reagieren. Die Entschützung erfolgt hydrolytisch, beispielsweise durch Kontakt mit Wasser oder Feuchtigkeit, insbesondere Luftfeuchtigkeit.

Bei Zutritt von Feuchtigkeit können die Aldiminogruppen der Additionsprodukte der Formel (1) über Zwischenstufen formal zu Aminogruppen hydrolysieren, wobei der entsprechende, zur Herstellung des Aldimins der Formel (XI) verwendete Aldehyd **A** freigesetzt wird. Da diese Hydrolysereaktion reversibel ist und das chemische Gleichgewicht deutlich auf der Aldiminseite liegt, ist davon auszugehen, dass in Abwesenheit von gegenüber Aminen reaktiven Gruppen nur ein Teil der Aldiminogruppen teilweise oder vollständig hydrolysieren. Die Reaktion der Isocyanat-Gruppen mit den hydrolysierenden Aldiminogruppen muss dabei nicht notwendigerweise über Aminogruppen erfolgen. Selbstverständlich sind auch Reaktionen mit Zwischenstufen der Hydrolysereaktion möglich. Beispielsweise ist es denkbar, dass die hydrolysierende Aldiminogruppe in der Form eines Halbaminals direkt mit den Isocyanat-Gruppen reagiert.

Die Zusammensetzung enthält weiterhin ein isocyanat-haltiges Polyurethanpolymer **P**. Der Begriff "Polymer" umfasst hier und im gesamten vorliegenden Dokument sowohl ein Kollektiv von chemisch einheitlichen, sich aber in Bezug auf Polymerisationsgrad, Molmasse und Kettenlänge unterscheidenden Makromolekülen, die durch eine Polyreaktion hergestellt wurden, als auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff "Polyurethanpolymer" umfasst sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyharnstoffe, Polyharnstoffe, Polyester-Polyharnstoffe, Polyisocyanurate, Polycarbodiimide, usw.

Mit dem Begriff "Kunststoffvorläufer" werden im vorliegenden Dokument monomere, oligomere oder polymere organische Verbindungen - oder solche Verbindungen zu einem wesentlichen Teil enthaltende homogene oder heterogene Zusammensetzungen - bezeichnet, welche aufgrund von in ihnen enthaltenen, für Polyreaktionen zugänglichen Reaktivgruppen befähigt sind, mit sich allein oder zusammen mit anderen Molekülen zu hochmolekularen Kunststoffen, das heisst organischen Polymeren, auszureagieren, ein Prozess, der gemeinhin als "Aushärtung" oder auch als "Vernetzung" bezeichnet wird - unabhängig davon, ob die bei der Aushärtung ablaufenden Reaktionen zu kovalent oder andersartig vernetzten Strukturen führen. Der Begriff "Polyreaktionen" umfasst dabei sämtliche Arten von Polyadditions-, Polykondensation- und Polymerisationsreaktionen.

Das Polyurethanpolymer **P** wird hergestellt durch Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanpolymer **P** nach der Umsetzung aller Hydroxylgruppen des Polyols beispielsweise ein Gehalt an freien Isocyanatgruppen von 0.1 - 15 Gewichts-%, insbesondere 0.5 - 5 Gewichts-%, bezogen auf das gesamte Polyurethanpolymer **P,** verbleibt. Gegebenenfalls kann das Polyurethanpolymer **P** unter Mitverwendung von Weichmachern hergestellt werden, wobei die verwendeten Weichmacher keine gegenüber Isocyanaten reaktive Gruppen enthalten.

Als Polyole für die Herstellung eines solchen Isocyanat-haltigen Polyurethanpolymers **P** können beispielsweise die folgenden, handelsüblichen Polyole, oder beliebige Mischungen davon, eingesetzt werden:

- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
  Besonders geeignet sind Polyoxyalkylendiole oder Polyoxyalkylentriole, insbesondere Polyoxypropylendiole oder Polyoxypropylentriole. Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Der Begriff "Molekulargewicht" bezeichnet im vorliegenden Dokument das Molekulargewichtsmittel $M_n$.
  Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar® CTBN von Hanse Chemie) hergestellt werden können.

Diese genannten Polyole weisen ein mittleres Molekulargewicht von 250 - 30'000 g/mol, insbesondere von 1 '000 - 30'000 g/mol, und eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **P** mitverwendet werden.

Als Polyisocyanate für die Herstellung eines solchen Isocyanat-haltigen Polyurethanpolymers werden die mono- oder oligomeren zwei- oder mehrwertigen Isocyanate verwendet, wie sie zur Herstellung der Aldimin-haltigen Verbindung der Formel (I) als Polyisocyanate **D** geeignet genannt wurden. Als Polyisocyanate insbesondere geeignet sind MDI, HDI, TDI und IPDI.

Die -wie bereits vorgängig beschrieben- in der Zusammensetzung vorhandene Aldimin-haltige Verbindung der Formel (I) kann gesondert hergestellt und als solche in die Zusammensetzung eingearbeitet werden. Sie kann aber auch in situ, das heisst im Zuge der Herstellung der Zusammensetzung, hergestellt werden, indem geeignete Mengen von mindestens einem Aldimin der Formel (XI) und mindestens einem Polyisocyanat **D** in situ, das heisst in Anwesenheit weiterer Bestandteile der Zusammensetzung, umgesetzt werden. Das Polyisocyanat **D** stellt dabei bevorzugt ein Isocyanat-haltiges Polyurethanpolymer **P** dar, wie es oben im Detail beschrieben wurde.

Typischerweise ist die Aldimin-haltige Verbindung der Formel (I) in einer Menge von 0.1 bis 30 Gewichts-%, bevorzugt 0.5 bis 20 Gewichts-%, und insbesondere 1 bis 10 Gewichts-%, bezogen auf die Zusammensetzung, vorhanden.

Für den Fall, dass die Aldimin-haltige Verbindung der Formel (I) heterofunktionell ist, kann ihr Gehalt auch mehr als 30 Gewichts-% betragen. Ihr Gehalt kann dann auch bis gegen 100 Gewichts-% betragen, da eine derartige Zusammensetzung unter dem Einfluss von Wasser vernetzt. Dies ist der Fall, wenn m, q und p in Formel (1) so gewählt sind, dass $m*p \leq q$ ist.

Es ist vorteilhaft, wenn die Zusammensetzung zusätzlich zur Aldimin-haltigen Verbindung der Formel (I) und zum Polyurethanpolymer **P** mindestens einen Katalysator **KAT-1** enthält. Als Katalysator **KAT-1** geeignet sind Verbindungen, welche zusammen mit Isocyanatgruppen lagerstabil sind, und welche die zur Aushärtung der Zusammensetzung führenden Reaktionen der Isocyanatgruppen, insbesondere jene mit Aldiminogruppen sowie mit Feuchtigkeit, beschleunigen. Als geeignete Katalysatoren **KAT-1** genannt werden sollen Säuren, beispielsweise organische Carbonsäuren wie Benzoesäure, Salicylsäure oder 2-Nitrobenzoesäure, organische Carbonsäureanhydride wie Phthalsäureanhydrid oder Hexahydrophthalsäureanhydrid, Silylester von organischen Carbonsäuren, organische Sulfonsäuren wie Methansulfonsäure, p-Toluolsulfonsäure oder 4-Dodecylbenzolsulfonsäure, oder weitere organische oder anorganische Säuren; Metallverbindungen, beispielsweise Zinnverbindungen, zum Beispiel Dialkylzinndicarboxylate wie Dibutylzinndiacetat, Dibutylzinn-bis-(2-ethylhexanoat), Dibutylzinndilaurat, Dibutylzinndipalmitat, Dibutylzinndistearat, Dibutylzinndioleat, Dibutylzinndilinolat, Dibutylzinndilinolenat, Dibutylzinndiacetylacetonat, Dibutylzinnmaleat, Dibutylzinn-bis-(octylmaleinat), Dibutylzinnphthalat, Dimethylzinndilaurat, Dioctylzinndiacetat oder Dioctylzinndilaurat, Dialkylzinnmercaptide wie Dibutylzinn-bis-(2-ethylhexylmercaptoacetat) oder Dioctylzinn-bis-(2-ethylhexyl mercaptoacetat), Dibutylzinndichlorid, Monobutylzinntrichlorid, Alkylzinnthioester, Dibutylzinnoxid, Dioctylzinnoxid, Zinn(II)-carboxylate wie Zinn(II)-octoat, Zinn(II)-2-ethylhexanoat, Zinn(II)-laurat, Zinn(II)-oleat oder Zinn(II)-naphthenat, Stannoxane wie Laurylstannoxan, Bismutverbindungen wie Bismut(III)-octoat, Bismut(III)-neodecanoat oder Bismut(III)-oxinate; schwach basische tertiäre Aminverbindungen wie beispielsweise 2,2'-Dimorpholinodiethylether und andere Morpholinether-Derivate; sowie Kombinationen der genannten Verbindungen, insbesondere von Säuren und Metallverbindungen oder von Metallverbindungen und aminogruppenhaltigen Verbindungen.

Die Zusammensetzung enthält gegebenenfalls weitere Bestandteile, wie sie nach dem Stand der Technik üblicherweise eingesetzt werden. Insbesondere enthält die Zusammensetzung gegebenenfalls eines oder mehrere der folgenden Hilfs- und Zusatzmittel:

- Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, Polyole wie beispielsweise Polyoxyalkylenpolyole oder Polyesterpolyole, organische Phosphor- und Sulfonsäureester oder Polybutene;
- Lösemittel, beispielsweise Ketone wie Aceton, Methylethylketon, Diisobutylketon,Acetonylaceton,Mesityloxid,sowie cyclische Ketone wie Methylcyclohexanon und Cyclohexanon; Ester wie Ethylacetat, Propylacetat oder Butylacetat, Formiate, Propionate oder Malonate; Ether wie Ketonether, Esterether und Dialkylether wie Diisopropylether, Diethylether, Dibutylether, Diethylenglykoldiethylether sowie Ethylenglykoldiethylether; aliphatische und aromatische Kohlenwasserstoffe wie Toluol, Xylol, Heptan, Octan sowie unterschiedliche Erdölfraktionen wie Naphtha, White Spirit, Petrolether oder Benzin;halogenierte Kohlenwasserstoffe wie Methylenchlorid; sowie N-alkylierte Lactame wie beispielsweise N-Methylpyrrolidon,N-Cyclohexylpyrrolidon oder N-Dodecylpyrrolidon;
- anorganische und organische Füllstoffe, wie zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren, PVC-Pulver oder Hohlkugeln; Fasern, beispielsweise aus Polyethylen; Pigmente;
- weitere in der Polyurethanchemie übliche Katalysatoren;
- Reaktivverdünner und Vernetzer, beispielsweise Polyisocyanate wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethandiisocyanat, 1,3- und 1,4-Tetramethylxylylendiisocyanat, Oligomere und Polymere dieser Polyisocyanate, insbesondere Isocyanurate, Carbodiimide, Uretonimine, Biurete, Allophanate und Iminooxadiazindione der genannten Polyisocyanate,

Addukte von Polyisocyanaten mit kurzkettigen Polyolen, sowie Adipinsäuredihydrazid und andere Dihydrazide;

- latente Polyamine wie beispielsweise Polyaldimine, Polyketimine, Polyenamine, Polyoxazolidine, an einen Zeolith adsorbierte oder mikroverkapselte Polyamine sowie Amin-Metallkomplexe, bevorzugt Polyaldimine Polyaldimine aus der Umsetzung eines primären aliphatischen Polyamins mit einem Aldehyd, insbesondere einem Aldehyd **A** wie beispielsweise 2,2-Dimethyl-3-acyloxy-propanal, insbesondere 2,2-Dimethyl-3-lauroyloxy-propanal, sowie Komplexe zwischen Methylendianilin (MDA) und Natriumchlorid (erhältlich als Dispersion in Diethylhexylphthalat oder Diisodecylphthalat unter dem Handelsnamen Caytur® 21 von Crompton Chemical);
- Trocknungsmittel, wie beispielsweise p-Tosylisocyanat und andere reaktive Isocyanate, Orthoameisensäureester, Calciumoxid; Vinyltrimethoxysilan oder andere schnell hydrolysierende Silane wie beispielsweise Organoalkoxysilane, welche in $\alpha$-Stellung zur Silangruppe eine funktionelle Gruppe aufweisen, oder Molekularsiebe;
- Rheologie-Modifizierer wie beispielsweise Verdickungsmittel, zum Beispiel Harnstoffverbindungen, Polyamidwachse, Bentonite oder pyrogene Kieselsäuren;
- Haftvermittler, insbesondere Silane wie beispielsweise Epoxysilane, Vinylsilane, (Meth)acrylsilane, Isocyanatosilane, Carbamatosilane, S-(Alkylcarbonyl)-mercaptosilane und Aldiminosilane, sowie oligomere Formen dieser Silane;
- Stabilisatoren gegen Wärme, Licht- und UV-Strahlung; flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen;

sowie weitere üblicherweise in Isocyanat-haltigen Zusammensetzungen eingesetzte Substanzen.

Weiterhin kann die Zusammensetzung Polymere enthalten, welche hydrolysierbare Organoalkoxysilangruppen aufweisen, welche im folgenden als "Silangruppen" bezeichnet sind. Beispielhaft für solche Silangruppen-haltigen Polymere seien die folgenden genannt: Umsetzungsprodukte von Isocyanat-haltigen Polyurethanpolymeren mit gegenüber Isocyanaten reaktiven Organoalkoxysilanen wie beispielsweise Mercaptoalkylalkoxysilanen oder Aminoalkylalkoxysilanen, beschrieben beispielsweise in US 3,632,557, insbesondere die Umsetzungsprodukte von Isocyanat-haltigen Polyurethanpolymeren mit Michael-Addukten von Aminoalkylsilanen und Malein- oder Fumarsäurediestern, beschrieben beispielsweise in EP 0 403 921 B1; Produkte aus Hydrosilylierungsreaktionen von Polymeren mit endständigen Doppelbindungen, insbesondere von allylterminierten Polyoxyalkylenpolymeren, mit Alkoxysilanen, beschrieben beispielsweise in US 3,971,751 und US 6,207,766; Umsetzungsprodukte von Polymeren enthaltend aktive Wasserstoffatome, beispielsweise in Form von Hydroxyl- oder Mercaptogruppen, mit Isocyanatoalkylsilanen, beschrieben beispielsweise in US 4,345,053 und US 5,990,257; Polymere enthaltend 3-(N-Silylalkyl)-amino-propenoat-Gruppen, welche Umsetzungsprodukte darstellen aus 3-Oxopropanoat-Gruppen enthaltenden Polymeren und Aminoalkylsilanen, beschrieben beispielsweise in WO 2004/056905 A1. Die Zusammensetzung kann auch Polymere enthalten, welche sowohl Isocyanat- als auch Silangruppen aufweisen.

Das molare Verhältnis zwischen Aldimino- und Isocyanatgruppen in der Zusammensetzung beträgt vorzugsweise 0.1 - 1.1, bevorzugt 0.25 - 1.0, besonders bevorzugt 0.5 - 1.0.

Die Zusammensetzung wird unter Ausschluss von Feuchtigkeit hergestellt und aufbewahrt. In einer geeigneten, klimadichten Verpackung oder Anordnung, wie beispielsweise in einem Fass, einem Beutel oder einer Kartusche, verfügt sie über eine hervorragende Lagerstabilität. Mit den Begriffen "lagerstabil" und "Lagerstabilität" in Zusammenhang mit einer Zusammensetzung wird im vorliegenden Dokument der Sachverhalt bezeichnet, dass die Viskosität der Zusammensetzung bei geeigneter Lagerung in der betrachteten Zeitspanne nicht oder höchstens so stark ansteigt, dass die Zusammensetzung auf die vorgesehene Weise verwendbar bleibt.
Die beschriebene Zusammensetzung eignet sich als Kunststoffvorläufer.

Wird die Zusammensetzung in Kontakt mit Feuchtigkeit gebracht, beginnt sie zu einem hochmolekularen Polyurethankunststoff auszuhärten. Die Zusammensetzung ist somit feuchtigkeitshärtend und wird als einkomponentige feuchtigkeitshärtende Zusammensetzung bezeichnet. Die Aushärtung beruht auf einer Kombination von verschiedenen Hydrolyse-, Additions- und Kondensationsreaktionen zwischen den in der Zusammensetzung enthaltenen Reaktivgruppen, namentlich Aldiminogruppen und Isocyanatgruppen sowie gegebenenfalls vorhandenen Silangruppen. Die Aldiminogruppen hydrolysieren formal zu Aminogruppen und reagieren mit den Isocyanatgruppen rasch zu Harnstoffgruppen. Isocyanatgruppen reagieren untereinander zu Harnstoffgruppen, während Silangruppen untereinander zu Siloxangruppen reagieren. Die Reaktion zwischen hydrolysierenden Aldiminogruppen und Isocyanatgruppen ist dabei schneller als die Reaktion der Isocyanatgruppen untereinander und verläuft bis zum vollständigen oder nahezu vollständigen Verschwinden der Aldiminogruppen ab. Die hydrolysierenden Aldiminogruppen müssen dabei nicht notwendigerweise in vollständig hydrolysierter Form, als Aminogruppen, mit den Isocyanatgruppen reagieren, sondern können auch in teilweise hydrolysierter Form, beispielsweise in Form von Halbaminalgruppen, mit den Isocyanatgruppen reagieren. Neben der Feuchtigkeit können auch weitere Faktoren, wie starke Erwärmung, beispielsweise auf 80 bis 200 ˚C, oder UV-Strahlung, oder eine Kombination dieser Faktoren, zur Aushärtung der Zusammensetzung beitragen.

Unter der Voraussetzung, dass genügend Feuchtigkeit zur Verfügung steht, härtet die Zusammensetzung schnell und vollständig zu einer weitgehend klebefreien Masse aus. Die Aushärtung verläuft ohne Blasenbildung, da

die Isocyanatgruppen teilweise oder vollständig mit den hydrolysierenden Aldiminogruppen reagieren und deshalb nur wenig oder gar kein $CO_2$ entsteht. Die Aushärtung wird durch die Anwesenheit von Katalysatoren, beispielsweise die oben genannten organischen Carbonsäuren oder Sulfonsäuren, für die Hydrolyse der Aldiminogruppen zusätzlich beschleunigt, ohne dass es dabei zur Blasenbildung kommt. Die zur Aushärtung benötigte Feuchtigkeit kann aus der Luft stammen (Luftfeuchtigkeit), wobei die Zusammensetzung durch die Diffusion der Feuchtigkeit von aussen nach innen aushärtet. Die Zusammensetzung kann aber auch mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Zusammensetzung eine Wasser enthaltende Komponente zugesetzt werden, zum Beispiel in Form einer wasserhaltigen Paste, die beispielsweise über einen Statikmischer homogen oder heterogen mit der Zusammensetzung vermischt wird.

Aufgrund der Geruchsfreiheit der Aldimin-haltigen Verbindungen der Formel (I), ist die Zusammensetzung vor, während und nach der Aushärtung geruchsfrei. Sie kann somit auch für Geruchsfreiheit voraussetzende Anwendungen eingesetzt werden, wie beispielsweise für Verklebungen, Abdichtungen, Beschichtungen oder Beläge im Innern von Fahrzeugen oder Gebäuden.

Die Zusammensetzung kann als Kunststoffvorläufer für verschiedenste Zwecke verwendet werden. Sie ist insbesondere geeignet zur Verwendung als Klebstoff für das Verkleben von diversen Substraten, beispielsweise zum Verkleben von Bauteilen bei der Herstellung von Automobilen, Schienenfahrzeugen, Schiffen oder anderen industriellen Gütern, als Dichtstoff aller Art, beispielsweise zum Abdichten von Fugen im Bau, sowie als Beschichtung oder Belag für diverse Artikel beziehungsweise variable Substrate. Als Beschichtungen bevorzugt sind Schutzanstriche, Versiegelungen und Schutzbeschichtungen. Unter den Belägen sind besonders Bodenbeläge als bevorzugt zu nennen. Solche Beläge werden hergestellt, indem die Zusammensetzung typischerweise auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen eingesetzt. Da viele dieser Anwendungen grossflächig erfolgen, kann schon eine geringfügige Freisetzung von Substanzen aus dem Belag zu arbeitshygienischen Schwierigkeiten und / oder Geruchsbelästigungen führen, selbst wenn es sich um eine Anwendung im Aussenbereich handelt. Allerdings wird ein Grossteil der Bodenbeläge im Innenbereich appliziert, weshalb auf eine geringe Geruchsbildung hier besonderes Gewicht gelegt wird. In einer bevorzugten Ausführungsform werden die beschriebenen Zusammensetzungen als Klebstoff oder als Dichtstoff eingesetzt.

In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.

In der Anwendung als Dichtstoff wird die Zusammensetzung zwischen die Substrate **S1** und **S2** appliziert und anschliessend erfolgt die Aushärtung. Üblicherweise wird der Dichtstoff in eine Fuge eingepresst.

In beiden Anwendungen kann das Substrat **S1** gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke, insbesondere Automobillacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Unter einem "Primer" wird im vorliegenden Dokument eine als Voranstrich geeignete Zusammensetzung verstanden, die neben nichtreaktiven flüchtigen Stoffen und optional festen Zuschlägen mindestens ein Polymer und/oder mindestens eine Substanz mit reaktiven Gruppen enthält und die befähigt ist, bei der Applikation auf einem Substrat zu einem festen, gut haftenden Film in einer Schichtdicke von typischerweise 10 - 15 $\mu$m auszuhärten, wobei die Aushärtung entweder allein durch das Verdampfen der nichtreaktiven flüchtigen Stoffe, wie beispielsweise Lösemittel oder Wasser, oder durch eine chemische Reaktion, oder durch eine Kombination dieser Faktoren, zustande kommt, und welche eine gute Haftung zu einer nachfolgend aufgebrachten Schicht, beispielsweise einem Kleb- oder Dichtstoff, aufbaut.

Die Applikation des Kleb- oder Dichtstoffes erfolgt vorzugsweise gleichmässig. Die Applikation der Zusammensetzung kann in einem breiten Temperaturspektrum erfolgen. Beispielsweise kann die Zusammensetzung bei Raumtemperatur appliziert werden, wie es für einen elastischen Klebstoff oder einen Dichtstoff typisch ist. Die Zusammensetzung kann aber auch bei tieferen wie auch bei höheren Temperaturen appliziert werden. Letzteres ist insbesondere dann vorteilhaft, wenn die Zusammensetzung hochviskose oder schmelzbare Komponenten enthält, wie sie in Schmelzklebstoffen, beispielsweise Warmschmelzklebstoffen (Warm-Melt) oder Heissschmelzklebstoffen (Hot-Melt) typischerweise vorhanden sind. Die Applikationstemperaturen liegen für Warm-Melts beispielsweise im Bereich von 40 bis 80 ˚C, bei Hot-Melts zwischen 80 und 200 ˚C, insbesondere zwischen 100 und 150 ˚C.

Nach dem Verkleben oder Abdichten der Substrate **S1** und **S2** mittels der Zusammensetzung wird ein verklebter oder abgedichteter Artikel erhalten. Ein derartiger Artikel kann ein Bauwerk sein, insbesondere ein Bauwerk des Hoch- oder Tiefbaus, oder ein Transportmittel, beispielsweise ein Fahrzeug zu Wasser oder zu Lande, insbesondere ein Automobil, ein Bus, ein Lastkraftwagen, ein Zug oder ein Schiff, oder ein Anbauteil davon.

Insbesondere falls die Zusammensetzung als Klebstoff für elastische Verklebungen verwendet wird, weist sie bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnittsfläche aufweisen kann. Geeignete Methoden zum Auftragen des Klebstoffes sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikationsroboters. Ein Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Die Zusammensetzung verfügt über eine hohe Frühfestigkeit. Für die Anwendung insbesondere als Klebstoff bedeutet dies, dass eine Klebeverbindung schon vor der vollständigen Aushärtung bis zu einem gewissen Grad belastbar ist, was in der industriellen Fertigung, beispielsweise in der Montage von Fahrzeugen, von grossem Vorteil ist, da angeklebte Bauteile schon nach relativ kurzer Zeit durch die Verklebung in Position gehalten werden und das geklebte Objekt dadurch ohne weitere Fixierung bewegt und weiter bearbeitet werden kann.

Die Zusammensetzung zeichnet sich im ausgehärteten Zustand über ausgezeichnete Eigenschaften aus. Sie verfügt beispielsweise über eine hohe Dehnbarkeit und eine hohe Zugfestigkeit. Ihr Elastizitätsmodul variiert in Abhängigkeit der zur Herstellung der Zusammensetzung verwendeten Komponenten, wie beispielsweise der Polyole, Polyisocyanate oder Polyamine, und lässt sich an die Anforderungen einer bestimmten Applikation anpassen, beispielsweise auf hohe Werte für Klebstoffe oder auf tiefe Werte für Dichtstoffe. Ihre Haftung auf diversen Substraten ist ausgezeichnet, was aufgrund der schnellen Aushärtung durchaus keine Selbstverständlichkeit darstellt, da schnell aushärtende Zusammensetzungen erfahrungsgemäss oft zu Schwächen im Haftungsaufbau neigen. Bezüglich der Stabilität gegenüber Alterungseinflüssen, wie beispielsweise Hitze, Sonnenlicht oder UV-Strahlung, Feuchtigkeit, Dampf oder Chemikalieneinwirkung, zeigen sich keine Abweichungen vom Verhalten, wie es für Isocyanat-haltige Polyurethanpolymere im ausgehärteten Zustand typisch ist.

## Beispiele

Beschreibung der Messmethoden

Die **Infrarotspektren** wurden auf einem FT-IR Gerät 1600 von Perkin-Elmer gemessen (horizontale ATR-Messeinheit mit ZnSe-Kristall); die Proben wurden unverdünnt als Filme aufgetragen. Die Absorptionsbanden sind in Wellenzahlen ($cm^{-1}$) angegeben (Messfenster: 4000-650 $cm^{-1}$).

**$^1$H-NMR-Spektren** wurden bei 298K gemessen auf einem Spektrometer des Typs Bruker DPX-300 bei 300.13 MHz; die chemischen Verschiebungen $\delta$ sind angegeben in ppm relativ zu Tetramethylsilan (TMS), Kopplungskonstanten *J* sind angegeben in Hz. Die Kopplungsmuster (t, m) wurden angegeben, auch wenn es sich nur um Pseudokopplungsmuster handelt.

Die **Viskosität** wurde auf einem thermostatisierten Kegel-Platten-Viskosimeter Physica UM (Kegeldurchmesser 20 mm, Kegelwinkel 1˚, Kegelspitze-Platten-Abstand 0.05 mm, Schergeschwindigkeit 10 bis 1000 $s^{-1}$) gemessen.

Der totale **Gehalt an Aldiminogruppen und freien Aminogruppen** in den hergestellten Verbindungen ("Amin-Gehalt") wurde titrimetrisch bestimmt (mit 0.1 N $HClO_4$ in Eisessig, gegen Kristallviolett) und ist stets angegeben in mmol $NH_2$/g (auch wenn es sich nicht nur um primäre Aminogruppen handelt).

Aldimine der Formel (XI)

### Aldimin *AL1*

In einem Rundkolben wurden unter Stickstoffatmosphäre 40.64 g (0.143 mol) 2,2-Dimethyl-3-lauroyloxy-propanal vorgelegt. Unter kräftigem Rühren wurden aus einem Eintropftrichter innerhalb von 5 Minuten 11.68 g (0.133 mol) N-Methyl-1,3-propandiamin zugegeben, wobei die Temperatur des Reaktionsgemisches auf 38˚C anstieg. Danach wurden die flüchtigen Bestandteile im Vakuum entfernt (10 mbar, 80˚C). Man erhielt 49.8 g einer farblosen, bei Raumtemperatur dünnflüssigen, klaren und geruchlosen Flüssigkeit, die einen Amin-Gehalt von 5.20 mmol $NH_2$/g aufwies.

Das Produkt liegt grösstenteils in der offenkettigen (Aldimin-) Form vor.
IR:3329(N-H),2954sh,2922,2852,789,1736(C=O),1668(C=N),1466,1419sh,1392,1374, 1348, 1300, 1249, 1234, 1160, 1112, 1069, 1058, 1021, 996, 938, 886, 876, 820, 722. $^1$H-NMR ($CDCl_3$, 300 K): δ 7.53 (s, 1 H, CH=N), 4.01 (s, 2 H, $CH_2O$), 3.44 (*t*, 2 H, CH=NC*H*$_2$CH$_2$), 2.58 (*t*, 2 H, NHC*H*$_2$), 2.42 (s, 3 H, C*H*$_3$NH), 2.30 (*t*, 2 H, $CH_2CO$), 1.76 (*t*, 2 H, CH=NCH$_2$C*H*$_2$),1.61 (*m*, 3 H, C*H*$_2$CH$_2$CO und CH$_3$N*H*CH$_2$), 1.27 (*m*, 16 H, CH$_3$-(C*H*$_2$)$_8$-CH$_2$CH$_2$CO), 1.10 (*s*, 6 H, C(C*H*$_3$)$_2$-CH$_2$O), 0.89 (*t*, 3 H, C*H*$_3$-(CH$_2$)$_{10}$-CO).

**Aldimin *AL2***

In einem Rundkolben wurden unter Stickstoffatmosphäre 30.13 g (0.106 mol) 2,2-Dimethyl-3-lauroyloxy-propanal vorgelegt. Unter kräftigem Rühren wurden aus einem Eintropftrichter innerhalb von 5 Minuten 15.00 g (0.096 mol) N-Cyclohexyl-1,3-propandiamin zugegeben, wobei die Temperatur des Reaktionsgemisches auf 36˚C anstieg. Danach wurden die flüchtigen Bestandteile im Vakuum entfernt (10 mbar, 80˚C). Man erhielt 43.2 g einer farblosen, bei Raumtemperatur dünnflüssigen, klaren und geruchlosen Flüssigkeit, die einen Amin-Gehalt von 4.39 mmol $NH_2$/g aufwies. Das Produkt liegt grösstenteils in der offenkettigen (Aldimin-) Form vor.
IR: 3308 (N-H), 2921, 2851, 2659, 1737 (C=O), 1668 (C=N), 1465, 1449, 1418sh, 1393,1366, 1346, 1301, 1248, 1158, 1111, 1068, 1020, 1002, 938, 888, 845, 797, 721. $^1$H-NMR ($CDCl_3$, 300 K): δ 7.53 (*s*, 1 H, CH=N), 4.01 (*s*, 2 H, $CH_2O$), 3.43 (*t*, 2 H, CH=NC*H*$_2$CH$_2$), 2.65 (*t*, 2 H, NHC*H*$_2$), 2.40 (*s*, 1 H, Cy-C$^1$*H*NH), 2.29 (*t*, 2 H, $CH_2CO$), 1.86 (*m*, 2 H, 2 Cy-H), 1.72 (*m*, 4 H, 2 Cy-H und CH=NCH$_2$C*H*$_2$), 1.60 (*m*, 3 H, C*H*$_2$CH$_2$CO und CH$_3$N*H*CH$_2$), 1.26 (*m*, 22 H, CH$_3$-(C*H*$_2$)$_8$-CH$_2$CH$_2$CO und 6 Cy-H), 1.09 (*s*, 6 H, C(C*H*$_3$)$_2$-CH$_2$O), 0.88 (*t*, 3 H, C*H*$_3$-(CH$_2$)$_{10}$-CO).

**Aldimin *AL3***

In einem Rundkolben wurden unter Stickstoffatmosphäre 69.31 g (0.244 mol) 2,2-Dimethyl-3-lauroyloxy-propanal vorgelegt. Unter kräftigem Rühren wurden aus einem Eintropftrichter innerhalb von 5 Minuten 14.72 g (0.112 mol) Dipropylentriamin zugegeben, wobei die Temperatur des Reaktionsgemisches auf 36˚C anstieg. Danach wurden die flüchtigen Bestandteile im Vakuum entfernt (10 mbar, 80˚C). Man erhielt 79.7 g einer farblosen, bei Raumtemperatur dünnflüssigen, klaren und geruchlosen Flüssigkeit, die einen Amin-Gehalt von 4.17 mmol $NH_2$/g aufwies. Das Produkt liegt grösstenteils in der offenkettigen (Aldimin-) Form vor.
IR:3308(N-H), 2952sh, 2921,2851,1737(C=O), 1667(C=N), 1466, 1418sh, 1393, 1373, 1348, 1301, 1248, 1234, 1159, 1111, 1070, 1019, 1001, 936, 875, 722.
$^1$H-NMR ($CDCl_3$, 300 K): δ 7.53 (*s*, 2 H, CH=N), 4.01 (*s*, 4 H, $CH_2O$), 3.42 (*t*, 4 H, CH=NC*H*$_2$CH$_2$), 2.61 (*t*, 4 H, NHC*H*$_2$), 2.29 (*t*, 4 H, $CH_2CO$), 1.73 (*m*, 4 H, CH=NCH$_2$C*H*$_2$), 1.59 (*m*, 5 H, CH$_2$CH$_2$CO und CH$_2$N*H*CH$_2$), 1.25 (*m*, 32 H, CH$_3$-(C*H*$_2$)$_8$-CH$_2$CH$_2$CO), 1.09 (*s*, 12 H, C(C*H*$_3$)$_2$-CH$_2$O), 0.87 (*t*, 6 H, C*H*$_3$-(CH$_2$)$_{10}$-CO).

**Aldimin *AL4***

In einem Rundkolben wurden unter Stickstoffatmosphäre 34.15 g (0.120 mol) 2,2-Dimethyl-3-lauroyloxy-propanal vorgelegt. Unter kräftigem Rühren wurden aus einem Eintropftrichter innerhalb von 5 Minuten 12.02 g (0.056 mol) Bis-hexamethylentriamin (BHMT-HP; Invista) zugegeben, wobei die Temperatur des Reaktionsgemisches auf 35˚C anstieg. Danach wurden die flüchtigen Bestandteile im Vakuum entfernt (10 mbar, 80˚C). Man erhielt 43.6 g einer farblosen, bei Raumtemperatur dünnflüssigen, klaren und geruchlosen Flüssigkeit, die einen Amin-Gehalt von 3.68 mmol $NH_2$/g aufwies. Das Produkt liegt grösstenteils in der offenkettigen (Aldimin-) Form vor.
IR: 2922, 2851, 1737 (C=O), 1668 (C=N), 1465, 1417, 1393, 1373, 1340, 1248, 1234, 1159, 1111, 1020, 1003, 933, 870, 722.
$^1$H-NMR ($CDCl_3$, 300 K): δ 7.52 (*s*, 2 H, CH=N), 4.02 (*s*, 4 H, $CH_2O$), 3.36 (*t*, 4 H, CH=NC*H*$_2$CH$_2$), 2.59 (*t*, 4 H, NHCH$_2$), 2.29 (*t*, 4 H, $CH_2CO$), 1.76-1.51 (*m*, 13 H, CH=NCH$_2$C*H*$_2$, NHCH$_2$C*H*$_2$, C*H*$_2$CH$_2$CO und CH$_2$N*H*CH$_2$), 1.27 (*m*, 40 H, CH$_3$-(C*H*$_2$)$_8$-CH$_2$CH$_2$CO und NHCH$_2$CH$_2$C*H*$_2$), 1.10 (*s*, 12 H, C(C*H*$_3$)$_2$-CH$_2$O), 0.88 (*t*, 6 H, C*H*$_3$-(CH$_2$)$_{10}$-CO).

**Aldimin *AL5***

In einem Rundkolben wurden unter Stickstoffatmosphäre 30.28 g (0.106 mol) 2,2-Dimethyl-3-lauroyloxy-propanal vorgelegt. Unter kräftigem Rühren wurden aus einem Eintropftrichter innerhalb von 5 Minuten 5.00 g (0.049 mol) Diethylentriamin zugegeben. Danach wurden die flüchtigen Bestandteile im Vakuum entfernt (10 mbar, 80˚C). Man erhielt 33.1 g einer farblosen, bei Raumtemperatur dünnflüssigen, klaren und geruchlosen Flüssigkeit, die einen Amin-Gehalt von 4.07 mmol $NH_2$/g aufwies. Das Produkt liegt grösstenteils in der offenkettigen (Aldimin-) Form vor.
IR: 3348 (N-H), 2952, 2921, 2852, 1735 (C=O), 1668 (C=N), 1632, 1465, 1417, 1393, 1373, 1345, 1248, 1232, 1158, 1110, 1056, 1022, 1005, 986, 931, 903, 875, 820, 721.

**Aldimin *AL6***

In einem Rundkolben wurden unter Stickstoffatmosphäre 20.97 g (0.074 mol) 2,2-Dimethyl-3-lauroyloxy-propanal vorgelegt. Unter kräftigem Rühren wurden aus einem Eintropftrichter innerhalb von 5 Minuten 10.00 g (0.067 mol) Triethylenglykol-monoamin (Jeffamine® XTA-250; Huntsman) zugegeben, wobei die Temperatur des Reaktionsgemisches auf 33˚C anstieg. Danach wurden die flüchtigen Bestandteile im Vakuum entfernt (10 mbar, 80˚C). Man erhielt 29.5 g einer farblosen, bei Raumtemperatur dünnflüssigen, klaren und geruchlosen Flüssigkeit, die einen Amin-Gehalt von 2.21 mmol $NH_2$/g aufwies. Das Produkt liegt grösstenteils in der offenkettigen (Aldimin-) Form vor.
IR: 3444br (O-H), 2952sh, 2921, 2852, 1736 (C=O), 1668 (C=N), 1466, 1418, 1394, 1374,1366,1350,1301 sh, 1248,1145sh,1116, 1067, 1023sh, 998sh, 932, 890, 829, 722. $^1$H-NMR ($CDCl_3$, 300 K): δ 7.59 (*s*, 1 H, CH=N), 4.03 (*s*, 2 H, $CH_2O$), 3.79-3.59 (*m*, 12 H, $HOCH_2CH_2OCH_2CH_2OCH_2CH_2N$), 3.47 (*s*, 1 H, *H*$OCH_2$), 2.31 (*t*, 2 H, $CH_2CO$), 1.61 (*m*, 2 H, $CH_2CH_2CO$), 1.27 (m, 16 H, $CH_3$-$(CH_2)_8$-$CH_2CH_2CO$), 1.11 (*s*, 6 H, $C(CH_3)_2$-$CH_2O$), 0.87 (*t*, 3 H, $CH_3$-$(CH_2)_{10}$-CO).

**Aldimin *AL7***

In einem Rundkolben wurden unter Stickstoffatmosphäre 34.48 g (0.121 mol) 2,2-Dimethyl-3-lauroyloxy-propanal vorgelegt. Unter kräftigem Rühren wurden aus einem Eintropftrichter innerhalb von 15 Minuten 20.00 g (0.117 mol) Isophorondiamin (Vestamin® IPD, Degussa) zugegeben. Danach wurden die flüchtigen Bestandteile im Vakuum entfernt (10 mbar, 80˚C). Zum so erhaltenen klaren, farblosen Öl gab man bei Raumtemperatur 25.25 g (0.121 mol) Isobornylacrylat (SR-506, Sartomer). Man liess 30 Minuten bei Raumtemperatur rühren, erwärmte die Mischung dann auf 85˚C und hielt sie während 24 Stunden bei dieser Temperatur. Darauf wurden die flüchtigen Bestandteile im Hochvakuum entfernt (100˚C). Man erhielt 72.0 g einer farblosen, bei Raumtemperatur dünnflüssigen, klaren und geruchlosen Flüssigkeit, die einen Amin-Gehalt von 3.09 mmol $NH_2$/g aufwies. Das Produkt liegt grösstenteils in der offenkettigen (Aldimin-) Form vor.
IR: 3322 (N-H), 2950, 2923, 2871, 2852, 1732 (C=O), 1668 (C=N), 1457, 1418sh, 1388sh, 1377, 1364, 1310, 1294, 1248, 1196, 1165, 1110, 1053, 1015, 987, 969, 942, 931 sh, 914, 893, 863, 840, 796, 722.

**Aldimin *AL8* (Vergleich)**

In einem Rundkolben wurden unter Stickstoffatmosphäre 48.18 g (0.243 mol) 3-Phenoxybenzaldehyd vorgelegt. Unter kräftigem Rühren wurden aus einem Eintropftrichter innerhalb von 5 Minuten 20.00 g (0.227 mol) N-Methyl-1,3-propandiamin zugegeben, wobei die Temperatur des Reaktionsgemisches auf 40˚C anstieg. Danach wurden die flüchtigen Bestandteile im Vakuum entfernt (10 mbar, 80˚C). Man erhielt 63.7 g einer hellgelben, bei Raumtemperatur dünnflüssigen, klaren und stark riechenden Flüssigkeit, die einen Amin-Gehalt von 7.08 mmol $NH_2$/g aufwies. Das Produkt liegt mehrheitlich in der cyclischen (Tetrahydropyrimidin-) Form vor.
IR: 3270 (N-H), 3060, 3036, 2978, 2940, 2837, 2773, 2692, 1935, 1865, 1778, 1702, 1645, 1582, 1483, 1456, 1442, 1418, 1370, 1353, 1308, 1236, 1210, 1188, 1163, 1128, 1108, 1072, 1053, 1023, 990, 964, 937, 917, 900, 889, 877, 839, 775, 748, 690. $^1$H-NMR ($CDCl_3$, 300 K): δ 7.42-7.28 (*m*, 5 Ar-H), 7.16-7.01 (*m*, 4 Ar-H), 3.74 (*s*, 1 H, Ar-CH(NH)N), 3.14 (*m*, 2 H, $HNCH^{eq}H^{ax}$ und $CH_3NCH^{eq}H^{ax}$), 2.78 (*m*, 1 H, $HNCH^{eq}H^{ax}$), 2.35 (*m*, 1 H, $CH_3NCH^{eq}H^{ax}$), 2.06 (*s*, 3 H, $CH_3N$), 1.90 (*m*, 1 H, $CH_3NCH_2CH^{eq}H^{ax}$), 1.58 (*m*, 2 H, $CH_3NCH_2CH^{eq}H^{ax}$ und *H*$NCH_2$).

**Aldimin *AL9***

In einem Rundkolben wurden unter Stickstoffatmosphäre 28.06 g (0.099 mol) 2,2-Dimethyl-3-lauroyloxy-propanal vorgelegt. Unter kräftigem Rühren wurden aus einem Eintropftrichter innerhalb von 3 Minuten 10.00 g (0.095 mol) 2-(2-Aminoethoxy)-ethanol (Diglycolamine® Agent; Huntsman) zugegeben, wobei die Temperatur des Reaktionsgemisches auf 40˚C anstieg. Danach wurden die flüchtigen Bestandteile im Vakuum entfernt (10 mbar, 80˚C). Man erhielt 36.3 g einer farblosen, bei Raumtemperatur dünnflüssigen, klaren und geruchlosen Flüssigkeit, die einen Amin-Gehalt von 2.58 mmol $NH_2$/g aufwies. Das Produkt liegt grösstenteils in der offenkettigen (Aldimin-) Form vor.
IR: 3435br (O-H), 2954sh, 2922, 2852, 1736 (C=O), 1668 (C=N), 1466, 1418, 1394, 1375, 1248, 1233, 1160, 1127, 1062, 1022, 933, 893, 813, 721.
$^1$H-NMR ($CDCl_3$, 300 K): δ 7.59 (*s*, 1 H, CH=N), 4.03 (*s*, 2 H, $CH_2O$), 3.71 (*m*, 4 H, $HOCH_2CH_2OCH_2CH_2N$), 3.58 (*m*, 4 H, $HOCH_2CH_2OCH_2CH_2N$), 2.44 (br *s*, 1 H, *H*$OCH_2$), 2.30 (*t*, 2 H, $CH_2CO$), 1.61 (*m*, 2 H, $CH_2CH_2CO$), 1.26 (*m*, 16 H, $CH_3$-$(CH_2)_8$-$CH_2CH_2CO$), 1.11 (*s*, 6 H, $C(CH_3)_2$-$CH_2O$), 0.88 (*t*, 3 H, $CH_3$-$(CH_2)_{10}$-CO).

**Aldimin *AL10***

In einem Rundkolben wurden unter Stickstoffatmosphäre 34.51 g (0.121 mol) 2,2-Dimethyl-3-lauroyloxy-propanal vorgelegt. Unter kräftigem Rühren wurden aus einem Eintropftrichter innerhalb von 5 Minuten 33.39 g N-Oleyl-1,3-propandiamin (Duomeen® O, Akzo Nobel; Aminzahl = 337 mg KOH/g) zugegeben, wobei die Temperatur des Reaktionsgemisches auf 48˚C anstieg. Danach wurden die flüchtigen Bestandteile im Vakuum entfernt (10 mbar, 80˚C). Man erhielt 65.7 g einer farblosen, bei Raumtemperatur dünnflüssigen, klaren und geruchlosen Flüssigkeit, die einen Amin-Gehalt von 3.07 mmol $NH_2$/g aufwies. Das Produkt liegt grösstenteils in der offenkettigen (Aldimin-) Form vor.
IR: 3307 (N-H), 3001sh, 2954sh, 2921, 2851, 1739 (C=O), 1668 (C=N), 1464, 1393,1375,1347,1301,1248,1158, 1114, 1067, 1020, 1000, 968, 935, 889, 721.
$^1$H-NMR ($CDCl_3$, 300 K): δ 7.53 (*t, J* = 1.2) und 7.51 (s) (total 1 H (Verhältnis ca. 0.85 / 0.15), CH=N), 5.34 (*m*, 2 H, $CH_2CH{=}CHCH_2$), 4.01 (*s*, 2 H, $CH_2O$), 3.43 (*t*, 2 H, $CH{=}NCH_2CH_2$), 2.60 (*m*, 4 H, $CH{=}NCH_2CH_2CH_2$ und $NHCH_2$), 2.30 (*t*, 2 H, $CH_2CO$), 2.01 (*m*, 4 H, $CH_2CH{=}CHCH_2$), 1.75 (*m*, 2 H, $CH{=}NCH_2CH_2$), 1.60 (*m*, 3 H, $CH_2CH_2CO$ und $CH_2NHCH_2$), 1.47 (*m*, 2 H, $CH_2NHCH_2CH_2$), 1.26 (*m*, 38 H, übrige $CH_2$-Gruppen), 1.09 (*s*, 6 H, $C(CH_3)_2$-$CH_2O$), 0.88 (*t*, 6 H, beide $CH_3CH_2CH_2$).

**Aldimin *AL11***

In einem Rundkolben wurden unter Stickstoffatmosphäre 40.00 g (0.141 mol) 2,2-Dimethyl-3-lauroyloxy-propanal vorgelegt. Unter kräftigem Rühren wurden aus einem Eintropftrichter innerhalb von 5 Minuten 24.00 g (0.128 mol) N-(2-Ethylhexyl)-1,3-propandiamin (BASF) zugegeben, die Mischung auf 80˚C erwärmt und gleichzeitig die flüchtigen Bestandteile im Vakuum entfernt (10 mbar). Man erhielt 61.5 g einer farblosen, bei Raumtemperatur dünnflüssigen, klaren und geruchlosen Flüssigkeit, die einen Amin-Gehalt von 4.12 mmol $NH_2$/g aufwies. Das Produkt liegt grösstenteils in der offenkettigen (Aldimin-) Form vor.
IR: 3322(N-H),2955,2922,2870sh,2852,2824sh, 1738 (C=O), 1668 (C=N), 1464, 1393, 1376,1342,1300, 1248, 1235, 1157, 1114, 1069, 1020, 1000, 935, 894, 873, 766, 723.

**Aldimin *AL12***

In einem Rundkolben wurden unter Stickstoffatmosphäre 35.00 g (0.123 mol) 2,2-Dimethyl-3-lauroyloxy-propanal vorgelegt. Unter kräftigem Rühren wurden innerhalb von 5 Minuten 36.31 g 50˚C warmes N-Talgalkyl-1,3-propandiamin (Duomeen® T, Akzo Nobel; Aminzahl = 346 mg KOH/g) zugegeben, die Mischung auf 80˚C erwärmt und gleichzeitig die flüchtigen Bestandteile im Vakuum entfernt (10 mbar). Man erhielt 69.2 g eines schmutzigweissen, bei Raumtemperatur festen und geruchlosen Körpers, der einen Amin-Gehalt von 3.20 mmol $NH_2$/g aufwies. Das Produkt liegt grösstenteils in der offenkettigen (Aldimin-) Form vor.
IR: 3316 (N-H), 2954sh, 2919, 2851, 2815sh, 1739 (C=O), 1668 (C=N), 1464, 1393, 1375, 1347, 1300, 1248, 1233, 1158, 1128sh, 1114, 1068, 1021, 1000, 968, 936, 917sh,889,873,721.

<u>Aldimin-haltige Verbindungen Formel (I)</u>

**Aldimin-haltige Verbindung *AV1***

79.21 g (40.2 mmol OH) Polyoxypropylen-Diol (Acclaim® 4200 N, Bayer; OH-Zahl 28.5 mg KOH/g), 10.79 g (43.1 mmol) 4,4'-Methylendiphenyldiisocyanat (MDI; Desmodur® 44 MC L, Bayer) und 10.00 g Diisodecylphthalat (DIDP; Palatinol® Z, BASF) wurden bei 80 ˚C zu einem NCO-terminierten Polyurethanpolymeren mit einem Gehalt an freien Isocyanat-Gruppen von 1.86 Gewichts-% und einer Viskosität bei 20 ˚C von 24 Pa·s umgesetzt. Zu diesem Polymer wurden bei Raumtemperatur 8.51 g (22.1 mmol) Aldimin ***AL1*** gegeben und die Mischung mittels eines Zentrifugalmischers (SpeedMixer™ DAC 150, FlackTek Inc.) innig vermengt. Man erhielt eine klare, homogene und geruchlose Flüssigkeit mit einer Viskosität bei 20 ˚C von 40 Pa·s.

**Aldimin-haltige Verbindung *AV2***

79.21 g (40.2 mmol OH) Polyoxypropylen-Diol (Acclaim® 4200 N, Bayer; OH-Zahl 28.5 mg KOH/g), 10.79 g (43.1 mmol) 4,4'-Methylendiphenyldiisocyanat (MDI; Desmodur® 44 MC L, Bayer) und 10.00 g Diisodecylphthalat (DIDP; Palatinol® Z, BASF) wurden bei 80 ˚C zu einem NCO-terminierten Polyurethanpolymeren mit einem Gehalt an freien Isocyanat-Gruppen von 1.86 Gewichts-% und einer Viskosität bei 20 ˚C von 24 Pa·s umgesetzt. Zu diesem Polymer wurden bei Raumtemperatur 10.62 g (14.8 mmol) Aldimin ***AL3*** gegeben und die Mischung mittels eines Zentrifugalmischers (SpeedMixer™ DAC 150, FlackTek Inc.) innig vermengt. Man erhielt eine klare, homogene und geruchlose

Flüssigkeit mit einer Viskosität bei 20 °C von 29 Pa·s.

**Aldimin-haltige Verbindung *AV3***

In einem Rundkolben wurden unter Stickstoffatmosphäre 1.74 g (13.9 mmol NCO) 4,4'-Diphenylmethan-diisocyanat (MDI; Desmodur® 44 MC L, Bayer) vorgelegt und auf 50 °C erwärmt. Aus einem Eintropftrichter wurden unter gutem Rühren innerhalb von 5 Minuten 10.00 g (13.9 mmol) Aldimin ***AL3*** zugegeben und die Mischung während einer Stunde bei 50 °C gerührt. Man erhielt eine farblose, bei Raumtemperatur dickflüssige, klare und geruchlose Flüssigkeit mit einem Amin-Gehalt von 2.37 mmol $NH_2$/g, die auf einem angefeuchteten pH-Papier neutral reagierte.
IR: 3300 (N-H), 2952sh, 2922, 2851, 1735 (C=O), 1664 (C=N), 1647sh, 1595, 1527sh, 1513, 1466, 1416, 1395, 1375, 1305, 1244, 1215, 1196, 1162, 1112, 1056, 1018, 1000,939,918sh,851,813,777,751,721.

**Aldimin-haltige Verbindung *AV4***

In einem Rundkolben wurden unter Stickstoffatmosphäre 3.47 g (27.7 mmol NCO) 4,4'-Diphenylmethan-diisocyanat (MDI; Desmodur® 44 MC L, Bayer) vorgelegt und auf 50 °C erwärmt. Aus einem Eintropftrichter wurden unter gutem Rühren innerhalb von 5 Minuten 10.00 g (13.9 mmol) Aldimin ***AL3*** zugegeben und die Mischung während einer Stunde bei 50 °C gerührt. Man erhielt eine blassgelbe, bei Raumtemperatur dickflüssige, klare und geruchlose Flüssigkeit, die auf einem angefeuchteten pH-Papier neutral reagierte.
IR: 3308 (N-H), 2954sh, 2922, 2852, 2266 (N=C=O), 1735 (C=O), 1665 (C=N), 1596, 1526sh, 1514, 1467, 1415, 1395, 1374, 1306, 1244, 1216, 1197, 1162, 1110, 1059, 1018, 1000, 940, 918sh, 854, 813, 781, 751, 721.

**Aldimin-haltige Verbindung *AV5***

In einem Rundkolben wurden unter Stickstoffatmosphäre 12.94 g (103.4 mmol NCO) 4,4'-Diphenylmethan-diisocyanat (MDI; Desmodur® 44 MC L, Bayer) vorgelegt und auf 50 °C erwärmt. Aus einem Eintropftrichter wurden unter gutem Rühren innerhalb von 10 Minuten 42.16 g (51.7 mmol) Aldimin ***AL4*** zugegeben und die Mischung während einer Stunde bei 50 °C gerührt. Man erhielt eine hellgelbe, bei Raumtemperatur dickflüssige, klare und geruchlose Flüssigkeit, die auf einem angefeuchteten pH-Papier neutral reagierte.
IR: 3336 (N-H), 2922, 2852, 2265 (N=C=O), 1736 (C=O), 1666 (C=N), 1640, 1594, 1513, 1488, 1465, 1416, 1394, 1373, 1307, 1237, 1169, 1110, 1065, 1018, 1000sh, 932,918sh,848,812,776,754,723.

**Aldimin-haltige Verbindung *AV6***

In einem Rundkolben wurden unter Stickstoffatmosphäre 10.00 g (51.4 mmol NCO) 1,6-Hexamethylendiisocyanat-Trimerisat (Desmodur® N-3300, Bayer; NCO-Gehalt = 21.61 Gewichts-%) in 47.05 g trockenem Diisodecylphthalat (DIDP; Palatinol® Z, BASF) gelöst. Aus einem Eintropftrichter wurden unter gutem Rühren bei Raumtemperatur innerhalb von 10 Minuten 37.05 g (102.9 mmol) Aldimin ***AL3*** zugegeben und die Mischung während einer Stunde gerührt. Man erhielt eine farblose, bei Raumtemperatur dünnflüssige, klare und geruchlose Flüssigkeit mit einem Amin-Gehalt von 1.11 mmol $NH_2$/g, die auf einem angefeuchteten pH-Papier neutral reagierte.
IR: 3422 (N-H), 3308 (N-H), 2954, 2924, 2853, 1727 (C=O), 1689, 1651, 1600, 1579, 1528, 1462, 1377, 1334, 1272, 1161, 1121, 1072, 1039, 995, 948, 870, 764, 742, 704.

**<u>Zusammensetzungen (Kunststoffvorläufer)</u>**

**Beispiele 1 bis 7 und Beispiel 8 (Vergleich)**

Für jedes Beispiel wurden 100.0 g Polyurethanpolymer ***PP1***, dessen Herstellung nachfolgend beschrieben wird, in einen Polypropylenbecher mit Schraubverschluss eingewogen und unter trockenen Stickstoff gestellt. Dazu wurden 0.3 g einer Salicylsäurelösung (5 Gewichts-% in Dioctyladipat) gegeben sowie das der Tabelle 1 aufgeführte Aldimin der Formel (XI) in der angegebenen Menge gegeben, die Mischung mittels eines Zentrifugalmischers (SpeedMixer™ DAC 150, FlackTek Inc.) innig vermengt, unmittelbar danach in eine innenlackierte Aluminiumtube abgefüllt und diese luftdicht verschlossen. Die Menge an zugegebenem Aldimin der Formel (XI) entspricht für alle Beispiele einem Verhältnis von 1.0 / 0.7 zwischen den Isocyanatgruppen im Polyurethanpolymer und der Summe der Reaktivgruppen (Aldiminogruppen plus Amino- oder Hydroxylgruppen) im Aldimin.
Das Polyurethanpolymer ***PP1*** wurde wie folgt hergestellt:

1300 g Polyoxypropylen-Diol (Acclaim® 4200 N, Bayer; OH-Zahl 28.5 mg KOH/g), 2600 g Polyoxypropylenpolyoxyethylen-Triol (Caradol® MD34-02, Shell; OH-Zahl 35.0 mg KOH/g), 605 g 4,4'-Methylendiphenyldiisocyanat (MDI; Desmodur® 44 MC L, Bayer) und 500 g Diisodecylphthalat (DIDP; Palatinol® Z, BASF) wurden bei 80 ˚C zu einem NCO-terminierten Polyurethanpolymeren mit einem Gehalt an freien Isocyanat-Gruppen von 2.07 Gewichts-% und einer Viskosität bei 20 ˚C von 48 Pa·s umgesetzt.

Die so erhaltene Zusammensetzungen wurden auf Lagerstabilität, Hautbildungszeit, Blasenbildung, Geruch und mechanische Eigenschaften nach Aushärtung geprüft.

Die **Lagerstabilität** wurde über die Veränderung der Viskosität während der Lagerung in der Wärme bestimmt. Dazu wurde der Kunststoffvorläufer in der verschlossenen Tube im Ofen bei 60 ˚C gelagert und seine Viskosität ein erstes Mal nach 12 Stunden, ein zweites Mal nach 7 Tagen Lagerdauer gemessen. Die Lagerstabilität ergibt sich aus der prozentualen Zunahme des zweiten Viskositätswerts gegenüber dem ersten.

Die Ergebnisse der Prüfungen sind in der Tabelle 1 aufgeführt.

Tabelle 1: Zusammensetzung und Lagerstabilität von Kunststoffvorläufern.

| Beispiel | Aldimin der Formel (I) | Aldimin-zugabe [g] | $\frac{[NCO]}{[[OH]+[NH]]}$ | Viskositätszunahme [%][a] |
|---|---|---|---|---|
| **(Ref)**[b] | - | - | - | 16 |
| **1** | ***AL1*** | 6.6 | 1.0/0.7 | 18 |
| **2** | ***AL2*** | 7.9 | 1.0/0.7 | 26 |
| **3** | ***AL3*** | 8.3 | 1.0/0.7 | 18 |
| **4** | ***AL4*** | 9.4 | 1.0/0.7 | 25 |
| **5** | ***AL5*** | 8.5 | 1.0/0.7 | 27 |
| **6** | ***AL6*** | 7.8 | 1.0/0.7 | 13 |
| **7** | ***AL7*** | 11.2 | 1.0/0.7 | 23 |
| **8 (Vergleich)** | ***AL8*** | 4.9 | 1.0/0.7 | 42 |

[a] = (Viskosität nach 7 d / Viskosität nach 12 Std. - 1) × 100%.
[b] Referenzbeispiel ohne Aldimin.

Aus Tabelle 1 ist ersichtlich, dass die Zusammensetzungen der Beispiele 1 bis 7, welche Aldimin-haltige Verbindungen der Formel (I) enthalten, die in situ aus dem Polyurethanpolymer ***PP1*** und den Aldiminen ***AL1*** bis ***AL7*** der Formel (XI) hergestellt wurden, eine gegenüber der Zusammensetzung des Referenzbeispiels, der keine Aldimin-haltige Verbindung enthält, eine vergleichbar grosse Viskositätserhöhung nach Lagerung aufweisen. Demgegenüber steigt die Viskosität des Kunststoffvorläufers des Vergleichsbeispiels 8, welcher eine Aldimin-haltige Verbindung nach dem Stand der Technik enthält, die in situ aus dem Polyurethanpolymer ***PP1*** und dem Aldimin ***AL8*** hergestellt wurde, deutlich stärker an.

Zur Bestimmung der **Hautbildungszeit** (Zeit bis zur Klebefreiheit, "tack-free time") wurde ein kleiner Teil des während 12 Stunden bei 60 ˚C gelagerten, raumtemperaturwarmen Kunststoffvorläufers in einer Schichtdicke von 3 mm auf Pappkarton aufgetragen und bei 23 ˚C und 50% relativer Luftfeuchtigkeit die Zeit bestimmt, die es dauerte, bis beim leichten Antippen der Kunststoffoberfläche mittels einer Pipette aus LDPE erstmals keine Rückstände auf der Pipette mehr zurückblieben.

Zur Bestimmung der **mechanischen Eigenschaften** nach Aushärtung wurde ein weiterer Teil des während 12 Stunden bei 60 ˚C gelagerten Kunststoffvorläufers als Film von ca. 2 mm Dicke in ein mit PTFE beschichtetes Blech gegossen, worauf man den Film während 7 Tagen bei 23 ˚C und 50% relativer Luftfeuchtigkeit zu einem elastischen Kunststoff aushärten liess. Der so hergestellte Kunststofffilm wurde gemäss DIN EN 53504 auf **Zugfestigkeit, Bruchdehnung** und **E-Modul** geprüft (Zuggeschwindigkeit: 200 mm/min). Qualitativ beurteilt wurden ausserdem die **Blasenbildung** (anhand der Menge Blasen, die während der Aushärtung des Films auftraten) sowie der **Geruch** (durch Riechen mit der Nase in einem Abstand von 10 cm, zuerst am frisch gegossenen Film und wieder am vollständig ausgehärteten Film). Die **Lichtechtheit** wurde bestimmt, indem der ausgehärtete Kunststofffilm während zwei Wochen bei 23 ˚C und 50% relativer Luftfeuchtigkeit dem Sonnenlicht ausgesetzt und die exponierte Oberfläche auf Polymerzersetzung geprüft wurde.

Die Ergebnisse der Prüfungen sind in der Tabelle 2 aufgeführt.

Tabelle 2: Eigenschaften während und nach der Aushärtung von Kunststoffvorläufern.

| **Beispiel** | **1** | **2** | **3** | **4** | **5** | **6** | **7** | **8 (Vgl)** |
|---|---|---|---|---|---|---|---|---|
| Hautbildung (min.) | 35 | 45 | 35 | 50 | 40 | 35 | 45 | 90 |
| Blasenbildung | keine | keine | keine | keine | keine | keine | keine | einige |
| Zugfestigkeit (MPa) | 0.8 | 1.0 | 0.8 | 0.7 | 0.7 | 0.7 | 1.0 | 1.0 |
| Bruchdehnung (%) | 180 | 200 | 60 | 70 | 80 | 130 | 220 | 240 |
| E-Modul (MPa)[a] | 1.3 | 1.4 | 2.3 | 1.7 | 1.6 | 1.3 | 1.3 | 1.1 |
| Geruch | kein | kein | kein | kein | kein | kein | kein | stark |
| Lichtechtheit | gut [b] | gut [b] | gut [b] | gut [b] | gut [b] | gut [b] | gut [b] | zers[b] |

[a] bei 0.5-5.0% Dehnung.
[b] stabil (trockene Oberfläche).
[c] Zersetzung (schmierige Oberfläche)

Aus der Tabelle 2 ist ersichtlich, dass die Zusammensetzungen der Beispiele 1 bis 7, welche jeweils eine in situ hergestellte erfindungsgemässe Aldimin-haltige Verbindung der Formel (I) enthalten, rasch und ohne Blasenbildung aushärten, geruchsfrei sind und im ausgehärteten Zustand lichtecht und gute mechanische Eigenschaften besitzen. Demgegenüber härtet der Kunststoffvorläufer des Vergleichsbeispiels 8, welcher eine in situ hergestellte Aldimin-haltige Verbindung nach dem Stand der Technik enthält, langsamer und unter partieller Blasenbildung aus, ist nicht lichtecht und weist einen starken Geruch auf.

**Beispiele 9 und 10**

Jeweils eines der in der Tabelle 3 aufgeführten Aldimin-haltigen Verbindungen der Formel (I) wurden zusammen mit dem Polyurethan polymer ***PP2***, dessen Herstellung nachfolgend beschrieben wird, in den angegebenen Mengen in einen Polypropylenbecher mit Schraubverschluss eingewogen und unter trockenen Stickstoff gestellt. Dazu wurden 0.3 g einer Salicylsäurelösung (5 Gewichts-% in Dioctyladipat) gegeben, die Mischung mittels eines Zentrifugalmischers (SpeedMixer™ DAC 150, FlackTek Inc.) innig vermengt, unmittelbar danach in eine innenlackierte Aluminiumtube abgefüllt und diese luftdicht verschlossen. Die Menge an zugegebener Aldimin-haltiger Verbindung der Formel (I) entspricht einem Verhältnis von 1 / 1 zwischen den Isocyanatgruppen im Polyurethanpolymer und den Aldiminogruppen in der Verbindung der Formel (I).

Das Polyurethanpolymer ***PP2*** wurde wie folgt hergestellt:

3960 g Polyoxypropylen-Diol (Acclaim® 4200 N, Bayer; OH-Zahl 28.5 mg KOH/g), 540 g 4,4'-Methylendiphenyldiisocyanat (MDI; Desmodur® 44 MC L, Bayer) und 500 g Diisodecylphthalat (DIDP; Palatinol® Z, BASF) wurden bei 80 °C zu einem NCO-terminierten Polyurethanpolymeren mit einem titrimetrisch bestimmten Gehalt an freien Isocyanat-Gruppen von 1.86 Gewichts-% und einer Viskosität bei 20 °C von 24 Pa·s umgesetzt.

Tabelle 3: Zusammensetzung der Kunststoffvorläufer der Beispiele **9** und **10**.

| Beispiel | Polyurethanpolymer ***PP2*** | Aldimin-haltige Verbindung |
|---|---|---|
| **9** | 23.04 g | ***AV1,*** 26.96 g |
| **10** | 30.13 g | ***AV2,*** 19.87 g |

Die so erhaltenen Kunststoffvorläufer wurden nach den für das Beispiel 1 beschriebenen Methoden auf Lagerstabilität, Hautbildungszeit, Blasenbildung, Geruch und mechanische Eigenschaften nach Aushärtung geprüft sowie nach der für das Beispiel 24 beschriebenen Methode nach Klebrigkeit.

Die Ergebnisse der Prüfungen sind in der Tabelle 4 aufgeführt.

Tabelle 4: Lagerstabilität, Eigenschaften während und nach der Aushärtung Eigenschaften während und nach der Aushärtung von Kunststoffvorläufern.

| Beispiel | **9** | **10** |
|---|---|---|
| Viskositätszunahme in % | 6 | 13 |
| Hautbildungszeit (min.) | 16 | 18 |
| Blasenbildung | keine | keine |
| Klebrigkeit | keine | keine |
| Zugfestigkeit (MPa) | 3.5 | 1.0 |
| Bruchdehnung (%) | 2100 | 90 |
| E-Modul (MPa)[a] | 1.1 | 1.9 |
| Geruch | kein | kein |
| [a] bei 0.5-5.0% Dehnung. | | |

Aus Tabelle 4 ist ersichtlich, dass die Kunststoffvorläufer der Beispiele 9 und 10, welche jeweils eine Aldimin-haltige Verbindung der Formel (I) ***AV1*** und ***AV2*** enthalten, bei der Lagerung nur einen geringfügigen Viskositätsanstieg zeigen. Sie härten bei ihrer Anwendung rasch und ohne Blasenbildung aus, sind geruchsfrei und verfügen im ausgehärteten Zustand über gute mechanische Eigenschaften.

Als Klebstoffe verwendbare Kunststoffvorläufer

**Beispiele 11 bis 18 und Beispiel 19 (Vergleich)**

Für jedes der Beispiele wurden die in der Tabelle 5 aufgeführten Substanzen in der angegebenen Menge (in Gewichtsteilen) in einem Vakuummischer unter Feuchtigkeitsausschluss zu einer knollenfreien, homogenen Paste verarbeitet, diese unverzüglich in eine innenlackierte Aluminium-Kartusche abgefüllt und die Kartusche luftdicht verschlossen. Die Polyurethanpolymere ***PP1*** und ***PP2*** wurden wie bei Beispiel 1, bzw. Beispiel 9, beschrieben hergestellt.

Das Polyaldimin ***PA1*** wurde hergestellt aus der Kondensationsreaktion zwischen 1,6-Hexamethylendiamin und 2,2-Dimethyl-3-lauroyloxy-propanal (im Molverhältnis zwischen Amino- und Aldehyd-Gruppen von 1 : 1.05) und hatte einen Amin-Gehalt von 2.94 mmol $NH_2$/g.

Das Polyaldimin ***PA2*** wurde hergestellt aus der Kondensationsreaktion zwischen alpha, omega-Polyoxypropylendiamin (Jeffamine® D-230, Huntsman; Amin-Gehalt = 8.29 mmol $NH_2$/g) und 2,2-Dimethyl-3-lauroyloxy-propanal (im Molverhältnis zwischen Amino- und Aldehyd-Gruppen von 1 : 1.05) und hatte einen Amin-Gehalt von 2.50 mmol $NH_2$/g.

Das Verhältnis zwischen den Isocyanatgruppen im Polyurethanpolymer und der Summe der Reaktivgruppen (Aldiminogruppen plus Amino- und Hydroxylgruppen) in den Aldimin-haltigen Verbindungen der Formel (I), den Aldiminen der Formel (XI) und den Polyaldiminen beträgt für alle Beispiele 1.0/0.7.

Tabelle 5: Zusammensetzung von Klebstoffen.

| **Beispiel** | **11** | **12** | **13** | **14** | **15** | **16** | **17** | **18** | **19 (Vgl)** |
|---|---|---|---|---|---|---|---|---|---|
| Polyurethanpolymer | ***PP1***, 50.0 | ***PP1***, 50.0 | ***PP1***, 50.0 | ***PP2***, 50.0 | ***PP2***, 50.0 | ***PP2***, 50.0 | ***PP2***, 50.0 | ***PP2***, 50.0 | ***PP1***, 50.0 |
| Aldimin(e) der Formel (XI) | ***AL1***, 3.3 | ***AL2***, 3.9 | ***AL6***, 3.9 | ***AL1***, 1.8; *AL3*, 1.9 | ***AL4***, 1.9 | - | - | - | ***AL8***, 2.5 |
| Aldimin-halt.Verb. der Formel (I)[a] | - | - | - | - | - | ***AV3***, 2.6 | ***AV4***, 3.0 | ***AV5***, 2.5 | - |
| Polyaldimin | - | - | - | - | ***PA1***, 2.9 | ***PA2***, 3.7 | ***PA2***, 2.5 | ***PA1***, 2.9 | - |

(fortgesetzt)

| Beispiel | 11 | 12 | 13 | 14 | 15 | 16 | 17 | 18 | 19 (Vgl) |
|---|---|---|---|---|---|---|---|---|---|
| Weichmacher[b] | 12.2 | 11.6 | 11.6 | 11.8 | 10.7 | 9.9 | 10.6 | 10.7 | 13.0 |
| Kaolin | 17.0 | 17.0 | 17.0 | 17.0 | 17.0 | 17.0 | 17.0 | 17.0 | 17.0 |
| Russ | 17.0 | 17.0 | 17.0 | 17.0 | 17.0 | 17.0 | 17.0 | 17.0 | 17.0 |
| Trocknungsmittel[c] | 0.1 | 0.1 | 0.1 | 0.1 | 0.1 | 0.1 | 0.1 | 0.1 | 0.1 |
| Epoxysilan[d] | 0.3 | 0.3 | 0.3 | 0.3 | 0.3 | 0.3 | 0.3 | 0.3 | 0.3 |
| Katalysator[e] | 0.1 | 0.1 | 0.1 | 0.1 | 0.1 | 0.1 | 0.1 | 0.1 | 0.1 |

[a] Aldimin-haltige Verbindung der Formel (I).
[b] Diisodecylphthalat (DIDP; Palatinol® Z, BASF).
[c]p-Tosylisocyanat.
[d] 3-Glycidoxypropyltrimethoxysilan (Silquest® A-187, OSi Crompton).
[e] Salicylsäure (5 Gewichts-% in Dioctyladipat).

Die so erhaltenen Klebstoffe wurden auf Hautbildungszeit, Geruch, mechanische Eigenschaften nach Aushärtung und auf Haftungseigenschaften auf Glas geprüft. Die Ergebnisse der Prüfungen sind in der Tabelle 6 aufgeführt.

Die **Shore A-**Härte wurde bestimmt nach DIN 53505.

Zur Prüfung der **Zugscherfestigkeit** wurden für jede Messung jeweils 2 Glasplättchen von 6 mm Dicke, 25 mm Breite und 75 mm Länge (Floatglas; Firma Rocholl, Schönbrunn, Deutschland) mit Sika® Aktivator (erhältlich bei Sika Schweiz AG) vorbehandelt. Nach einer Ablüftezeit von 10 Minuten wurden die Plättchen mit Hilfe einer passenden PTFE-Form im vertikalen Abstand von 5 mm so gegeneinander angeordnet, dass sie an den Kopfenden um 10 mm überlappten. Der Überlappungsbereich zwischen den Plättchen wurde mit Klebstoff befüllt, wobei dieser auf die aktivierten Seiten der Plättchen zu liegen kam. Der Klebstoff wurde während 7 Tagen bei 23 ˚C und 50% relativer Luftfeuchtigkeit ausgehärtet und dann wurde mit Hilfe einer Zugprüfmaschine die Bruchkraft bei einer konstanten Querjochgeschwindigkeit von 20 mm/min nach DIN EN 1465 bestimmt. Die angegebenen Werte sind Mittelwerte aus drei Messungen.

Die **Haftung auf Glas** wurde anhand des Bruchbildes auf den für die Bestimmung der Zugscherfestigkeit verwendeten Prüfkörper nach erfolgter Prüfung ermittelt. Ein 100% kohäsiver, das heisst vollständig im Klebstoff verlaufender Bruch wurde mit dem Wert "1" bewertet, während ein 0% kohäsiver, das heisst vollständig zwischen Glasoberfläche und Klebstoff verlaufender und damit adhäsiver Bruch mit dem Wert "5" bewertet wurde. Haftungen mit Kohäsionsbruchwerten von weniger als 75% gelten als ungenügend.
Die übrigen Prüfungen wurden wie bei Beispiel 1 beschrieben durchgeführt.

Aus der Tabelle 6 ist ersichtlich, dass die Klebstoffe der Beispiele 11 bis 18, welche Aldimin-haltige Verbindungen der Formel (I) enthalten, die in den Beispielen 11 bis 15 im Zuge der Klebstoffherstellung (in situ) aus Aldiminen der Formel (X1) und den Polyurethanpolymeren ***PP1*** oder ***PP2*** hergestellt wurden und in den Beispielen 16 bis 18 vorgängig hergestellt und, zum Teil kombiniert mit Polyaldiminen, in den Klebstoff eingemischt wurden, rasch aushärten, geruchsfrei sind und im ausgehärteten Zustand sehr gute mechanische Eigenschaften besitzen. Demgegenüber härtet der Klebstoff des Vergleichsbeispiels 36, welcher eine Aldimin-haltige Verbindung nach dem Stand der Technik, die in situ aus dem Aldimin ***AL8*** und dem Polyurethanpolymer ***PP1*** hergestellt wurde, enthält, langsamer aus, weist einen starken Geruch auf und verfügt über eine ungenügende Haftung zu Glas.

Tabelle 6: Eigenschaften während und nach der Aushärtung der Klebstoffe Zusammensetzung von Klebstoffen.

| Beispiel | 11 | 12 | 13 | 14 | 15 | 16 | 17 | 18 | 19 (Vgl) |
|---|---|---|---|---|---|---|---|---|---|
| Hautbildungszeit[a] | 23 | 27 | 18 | 40 | 60 | 68 | 80 | 50 | 90 |
| Geruch | kein | kein | kein | kein | kein | kein | kein | kein | stark |
| Shore A-Härte | 53 | 60 | 58 | 54 | 65 | 56 | 56 | 66 | 56 |
| Zugfestigkeit(MPa) | 9.7 | 9.9 | 9.9 | 10.2 | 9.1 | 8.1 | 9.0 | 7.0 | 9.6 |
| Bruchdehnung (%) | 650 | 590 | 530 | 720 | 530 | 700 | 650 | 450 | 550 |
| E-Modul (MPa)[b] | 3.6 | 4.6 | 4.0 | 3.3 | 7.3 | 4.1 | 4.0 | 9.0 | 4.0 |

(fortgesetzt)

| Beispiel | 11 | 12 | 13 | 14 | 15 | 16 | 17 | 18 | 19 (Vgl) |
|---|---|---|---|---|---|---|---|---|---|
| Zugscherfestigkeit[c] | 8.6 | 7.5 | 10.1 | 9.9 | 8.5 | 6.3 | 6.7 | 6.4 | 3.9 |
| Haftung auf Glas | 1 | 1 | 1 | 1 | 1 | 1 | 1 | 1 | 5 |

[a] in Minuten.
[b] bei 0.5-5.0% Dehnung.
[c] in MPa.

**Beispiele 20 bis 22 und Beispiel 23 (Vergleich)**

Für jedes der Beispiele wurden die in der Tabelle 7 aufgeführten Substanzen in der angegebenen Menge (in Gewichtsteilen) in einem Vakuummischer unter Feuchtigkeitsausschluss zu einer knollenfreien, homogenen Paste verarbeitet, diese unverzüglich in eine innenlackierte Aluminium-Kartusche abgefüllt und die Kartusche luftdicht verschlossen.
Das Polyurethanpolymer ***PP2*** wurde wie bei Beispiel 9 beschrieben hergestellt.
Das Polyurethanpolymer ***PP3*** wurde wie folgt hergestellt:

2000 g Polyoxypropylen-Diol (Acclaim® 4200 N, Bayer; OH-Zahl 28.5 mg KOH/g), 1935 g Polyoxypropylen-Triol (Acclaim® 6300 N, Bayer; OH-Zahl 28.0 mg KOH/g), 535 g 4,4'-Methylendiphenyldiisocyanat (MDI; Desmodur® 44 MC L, Bayer) und 500 g Diisodecylphthalat (DIDP; Palatinol® Z, BASF) wurden bei 80 °C zu einem NCO-terminierten Polyurethanpolymeren mit einem titrimetrisch bestimmten Gehalt an freien Isocyanat-Gruppen von 1.84 Gewichts-% und einer Viskosität bei 20 °C von 56 Pa·s umgesetzt. Das Polyaldimin ***PA2*** wurde wie bei Beispiel 11 beschrieben hergestellt.

Das Verhältnis zwischen den Isocyanatgruppen im Polyurethanpolymer und der Summe der Reaktivgruppen (Aldiminogruppen plus Amino- und Hydroxylgruppen) in der Aldimin-haltigen Verbindung der Formel (I) [die umgesetzte Amingruppe mit eingerechnet], den Aldiminen der Formel (XI) und dem Polyaldimin beträgt für alle Beispiele 1.0 / 0.45.

Tabelle 7: Zusammensetzung der Klebstoffe der Beispiele **20** bis **22** und Beispiel **23 (Vergleich).**

| Beispiel | 20 | 21 | 22 | 23 (Vergleich) |
|---|---|---|---|---|
| Polyurethanpolymer | ***PP3,*** 50.0 | ***PP2,*** 50.0 | ***PP2,*** 50.0 | ***PP3,*** 50.0 |
| Aldimin | ***AL1,*** 1.9 | ***AL3,*** 2.4 | - | - |
| Aldimin-haltige Verbindung | - | - | ***AV4,*** 3.2 | - |
| Polyaldimin | - | - | - | ***PA2,*** 3.9 |
| Weichmacher[a] | 13.1 | 12.6 | 11.8 | 10.8 |
| Kaolin | 17.0 | 17.0 | 17.0 | 17.0 |
| Russ | 17.0 | 17.0 | 17.0 | 17.0 |
| Trocknungsmittel[b] | 0.2 | 0.2 | 0.2 | 0.2 |
| Epoxysilan[c] | 0.3 | 0.3 | 0.3 | 0.3 |
| Säurekatalysator[d] | 0.2 | 0.2 | 0.2 | 0.2 |
| Zinnkatalysator[e] | 0.3 | 0.3 | 0.3 | 0.3 |

[a]Diisodecylphthalat (DIDP; Palatinol® Z, BASF).
[b] p-Tosylisocyanat.
[c] 3-Glycidoxypropyltrimethoxysilan (Silquest® A-187, OSi Crompton).
[d] Salicylsäure (5 Gew.% in Dioctyladipat).
[e] Di-n-butylzinndilaurat (2 Gew.-% in Diisodecylphthalat).

Der so erhaltene Klebstoff wurde auf Hautbildungszeit, Frühfestigkeit sowie mechanische Eigenschaften nach Aushärtung geprüft. Die Ergebnisse der Prüfungen sind in der Tabelle 8 aufgeführt.

Die **Frühfestigkeit** ("green strength") wurde wie folgt bestimmt: Pro Prüfung wurden zwei Glasplättchen der Dimension 40 x 100 x 6 mm auf der zu verklebenden Seite mit Sika® Aktivator (erhältlich bei Sika Schweiz AG) vorbehandelt. Nach einer Ablüftezeit von 10 Minuten wurde der Klebstoff in Form einer Dreiecksraupe parallel zur Längskante auf einem der Glasplättchen aufgetragen. Nach ca. einer Minute wurde der applizierte Klebstoff unter Verwendung des zweiten Glasplättchens mittels einer Zugmaschine (Zwick) auf 5 mm Kleb-Dicke verpresst (entsprechend einer Verklebungsbreite von ca. 1 cm), dann bei 23 °C und 50% relativer Luftfeuchtigkeit gelagert. Auf diese Weise wurden 2 mal 3 Prüflinge hergestellt und jeweils drei davon nach 4 und 7 Stunden Aushärtungszeit auf Frühfestigkeit geprüft. Dazu wurden die Prüflinge auf der Zugmaschine mit einer konstanten Zuggeschwindigkeit von 200 mm/min auseinander gezogen, die maximale Kraft hierfür in N/mm Raupenlänge registriert sowie die Energieaufnahme bis zum Bruch in J durch Integration der Kraft-Dehnungskurve bis zum Bruch der Probe ermittelt und die erhaltenen Werte jeweils über die drei Proben gemittelt.

Tabelle 8: Eigenschaften während und nach der Aushärtung der Klebstoffe der Beispiele **20** bis **22** und Beispiel **23** (Vergleich).

| Beispiel | **20** | **21** | **22** | **23 (Vgl)** |
|---|---|---|---|---|
| Hautbildungszeit (min.) | 25 | 45 | 65 | 34 |
| Max. Zugkraft nach 4 h (N/mm) | 75 | 52 | 55 | 38 |
| Zugenergie nach 4 h (J) | 10.4 | 8.2 | 7.2 | 3.5 |
| Max. Zugkraft nach 7 h (N/mm) | 135 | 86 | 97 | 76 |
| Zugenergie nach 7 h (J) | 18.7 | 11.5 | 12.3 | 8.1 |
| Shore A-Härte | 58 | 50 | 59 | 56 |
| Zugfestigkeit (MPa) | 9.6 | 7.1 | 6.9 | 9.8 |
| Bruchdehnung (%) | 700 | 630 | 640 | 720 |
| E-Modul (MPa)[a] | 3.4 | 2.5 | 3.9 | 4.3 |
| [a] bei 0.5-5.0% Dehnung. | | | | |

Aus der Tabelle 8 ist ersichtlich, dass die Klebstoffe der Beispiele 20 bis 22, welche Aldimin-haltige Verbindungen der Formel (I) enthalten, die in den Beispielen 20 und 21 im Zuge der Klebstoffherstellung (in situ) aus Aldiminen der Formel (XI) und den Polyurethanpolymeren ***PP2*** oder ***PP3*** hergestellt wurden und im Beispiel 22 vorgängig hergestellt und zusammen mit einem Polyaldimin in den Klebstoff eingemischt wurden, einen raschen Festigkeitsaufbau, d.h. eine hohe Frühfestigkeit, zeigen und nach vollständiger Aushärtung über sehr gute mechanische Eigenschaften verfügen. Demgegenüber weist der Klebstoff des Vergleichsbeispiels 23 nach dem Stand der Technik, welcher als Aldiminhaltige Verbindung ausschliesslich ein Dialdimin enthält, einen deutlich langsameren Festigkeitsaufbau auf, bei vergleichbaren mechanischen Eigenschaften nach vollständiger Aushärtung.

<u>Als Dichtstoffe verwendbare Kunststoffvorläufer</u>

**Beispiele 24 bis 31 und Beispiel 32 (Vergleich)**

Für jedes der Beispiele wurden die in der Tabelle 9 aufgeführten Substanzen in der angegebenen Menge (in Gewichtsteilen) in einem Vakuummischer unter Feuchtigkeitsausschluss zu einer knollenfreien, homogenen Paste verarbeitet, diese unverzüglich in eine innenlackierte Aluminium-Kartusche abgefüllt und die Kartusche luftdicht verschlossen.

Das Polyurethanpolymer ***PP4*** wurde wie folgt hergestellt:

3560 g Polyoxypropylen-Diol (Acclaim® 4200 N, Bayer; OH-Zahl 28.1 mg KOH/g), 1000 g Polyoxypropylen-Triol (Acclaim® 6300, Bayer; OH-Zahl 28.0 mg KOH/g) und 440 g Toluylendiisocyanat (TDI; Desmodur® T 80 P, Bayer) wurden bei 80 °C zu einem NCO-terminierten Polyurethanpolymeren mit einem titrimetrisch bestimmten Gehalt an freien Isocyanat-Gruppen von 2.21 Gewichts-% und einer Viskosität bei 20 °C von 14 Pa·s umgesetzt.

Das Polyurethanpolymer ***PP5*** wurde wie folgt hergestellt:

4560 g Polyoxypropylen-Diol (Acclaim® 4200 N, Bayer; OH-Zahl 28.1 mg KOH/g) und 440 g Toluylendiisocyanat (TDI; Desmodur® T 80 P, Bayer) wurden bei 80 ˚C zu einem NCO-terminierten Polyurethanpolymeren mit einem titrimetrisch bestimmten Gehalt an freien Isocyanat-Gruppen von 2.22 Gewichts-% und einer Viskosität bei 20 ˚C von 11 Pa·s umgesetzt. Das Polyaldimin ***PA2*** wurde wie bei Beispiel 11 beschrieben hergestellt.

Das Harnstoff-Verdickungsmittel wurde wie folgt hergestellt:

In einem Vakuummischer wurden 3000 g Diisodecylphthalat (DIDP; Palatinol® Z, BASF) und 480 g 4,4'-Methylendiphenyldiisocyanat (MDI; Desmodur® 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

Das Verhältnis zwischen den Isocyanatgruppen im Polyurethanpolymer und der Summe der Reaktivgruppen (Aldiminogruppen plus Amino- und Hydroxylgruppen) in den Aldiminen der Formel (XI) und den Polyaldiminen beträgt für alle Beispiele 1.0 / 0.67.

Tabelle 9: Zusammensetzung der Dichtstoffe der Beispiele 24 bis 31 und Beispiel 32 (Vergleich).

| Beispiel | **24** | **25** | **26** | **27** | **28** | **29** | **30** | **31** | **32 (Vgl)** |
|---|---|---|---|---|---|---|---|---|---|
| Polyurethanpolymer | ***PP4,*** 24.0 | ***PP4,*** 24.0 | ***PP4,*** 24.0 | ***PP4,*** 24.0 | ***PP4,*** 24.0 | ***PP5,*** 24.0 | ***PP5,*** 24.0 | ***PP5,*** 24.0 | ***PP4,*** 24.0 |
| Aldimin(e) der Formel (XI) | ***AL1,*** 1.6 | ***AL2,*** 2.7 | ***AL6,*** 1.9 | ***AL11,*** 2.1 | ***AL12,*** 2.6 | ***AL1,*** 1.0; *AL3,* 0.7 | ***AL9,*** 1.1; *AL3,* 0.7 | ***AL10,*** 1.8; *AL3,* 0.7 | - |
| Polyaldimin | - | - | - | - | - | - | - | - | ***PA2,*** 3.3 |
| Weichmacher[a] | 3.4 | 2.3 | 3.1 | 2.9 | 2.4 | 3.3 | 3.2 | 2.5 | 1.5 |
| Kreide | 38.0 | 38.0 | 38.0 | 38.0 | 38.0 | 38.0 | 38.0 | 38.0 | 38.0 |
| Verdickungsmittel | 28.0 | 28.0 | 28.0 | 28.0 | 28.0 | 28.0 | 28.0 | 28.0 | 28.0 |
| Titandioxid | 4.5 | 4.5 | 4.5 | 4.5 | 4.5 | 4.5 | 4.5 | 4.5 | 4.5 |
| Epoxysilan[c] | 0.2 | 0.2 | 0.2 | 0.2 | 0.2 | 0.2 | 0.2 | 0.2 | 0.2 |
| Katalysator[d] | 0.3 | 0.3 | 0.3 | 0.3 | 0.3 | 0.3 | 0.3 | 0.3 | 0.5 |

[a] Diisodecylphthalat (DIDP; Palatinol® Z, BASF).
[b] Harnstoff-Verdickungsmittel.
[c] 3-Glycidoxypropyltriethoxysilan (Dynasylan® GLYEO, Degussa).
[d] Salicylsäure (5 Gew.-% in Dioctyladipat).

Die so erhaltenen Dichtstoffe wurden auf Hautbildungszeit, Durchhärtungsgeschwindigkeit und mechanische Eigenschaften nach Aushärtung geprüft. Die **Durchhärtungsgeschwindigkeit** wurde bestimmt, indem der Dichtstoff mittels Kartuschenpistole durch eine Rundspitze (Öffnung 10 mm) als waagrechter, frei hängender Konus mit einer Länge von ca. 50 mm und einer Dicke in der Mitte von 30 mm auf ein an der Wand befestigtes Stück Pappkarton aufgetragen wurde, während 7 Tagen im Normklima belassen, dann vertikal mittig aufgeschnitten und die Dicke der ausgehärteten Dichtstoff-Schicht mit einem Massstab gemessen wurde. Die **Shore A**-Härte wurde bestimmt nach DIN 53505 an während 14 Tagen im Normklima ausgehärteten Prüfkörpern. Die übrigen Prüfungen wurden wie bei Beispiel 1 und Beispiel 11 beschrieben durchgeführt.

Die Ergebnisse der Prüfungen sind in der Tabelle 10 aufgeführt.

Tabelle 10: Eigenschaften während und nach der Aushärtung der Dichtstoffe der Beispiele 24 bis 31 und Beispiel 32 (Vergleich).

| Beispiel | **24** | **25** | **26** | **27** | **28** | **29** | **30** | **31** | **32 (Vgl)** |
|---|---|---|---|---|---|---|---|---|---|
| Hautbildungszeit[a] | 65 | 160 | 35 | 55 | 90 | 70 | 50 | 100 | 65 |
| Durchhärtung[b] | 15 | 12 | 10 | 9 | 7 | 15 | 15 | 12 | 4 |

(fortgesetzt)

| Beispiel | **24** | **25** | **26** | **27** | **28** | **29** | **30** | **31** | **32 (Vgl)** |
|---|---|---|---|---|---|---|---|---|---|
| Shore A-Härte | 31 | 24 | 35 | 33 | 25 | 30 | 34 | 26 | 31 |
| Zugfestigkeit (MPa) | 1.8 | 1.3 | 2.2 | 2.4 | 1.1 | 2.2 | 2.1 | 1.5 | 1.8 |
| Bruchdehnung (%) | 1480 | 1550 | 1420 | 1440 | 1470 | 1210 | 1240 | 1260 | 1040 |
| Spannung bei 100% Dehnung (MPa) | 1.0 | 0.6 | 1.2 | 0.9 | 0.7 | 0.8 | 1.0 | 0.6 | 1.4 |
| [a] in Minuten. [b] in mm. | | | | | | | | | |

Aus der Tabelle 10 ist ersichtlich, dass die erfindungsgemässen Dichtstoffe der Beispiele 24 bis 31, welche Aldimin-haltige Verbindungen der Formel (I) enthalten, die im Zuge der Dichtstoffherstellung (in situ) aus Aldiminen der Formel (XI) und den Polyurethanpolymeren ***PP4*** oder ***PP5*** hergestellt werden, rasch aushärten und im ausgehärteten Zustand sehr gute mechanische Eigenschaften besitzen, insbesondere eine hohe Dehnbarkeit und eine tiefe Spannung bei 100% Dehnung. Demgegenüber härtet der Dichtstoff des Vergleichsbeispiels 32 nach dem Stand der Technik, welcher das Polyaldimin ***PA2*** enthält, langsamer aus und weist im ausgehärteten Zustand weniger vorteilhafte mechanische Eigenschaften auf.

Als Beschichtungen verwendbare Kunststoffvorläufer

**Beispiel 33**

Eine Mischung von 1 g Carbodiimid-modifiziertem MDI (Desmodur® CD, Bayer), 2.5 g Aldimin-haltige Verbindung ***AV6***, 0.1 g 3-Glycidoxypropyl-trimethoxysilan und eine Spatelspitze Salicylsäure wurden mit Ethylacetat auf 50 Gewichts-% Feststoffgehalt verdünnt, die erhaltene Lösung mittels eines Pinsels in dünnster Schicht auf eine mit Heptan vorgereinigte Glasplatte (Floatglas; Firma Rocholl, Schönbrunn, Deutschland) aufgetragen und im Standardklima (23 ˚C, 50% relative Feuchtigkeit) stehen lassen. Nach 45 Minuten war ein klebefreier, glänzend-transparenter und gut haftender Film mit vollständig trockener Oberfläche entstanden. Die übrig bleibende, nicht applizierte Lösung liess sich in einem klimadichten Gefäss während mehreren Wochen ohne signifikante Viskositätserhöhung lagern.

**Beispiel 34**

Eine Mischung von 1 g Polyurethanpolymer ***PP6***, dessen Herstellung nachfolgend beschrieben wird, 0.67 g Aldimin-haltige Verbindung ***AV6***, 0.1 g 3-Glycidoxypropyl-trimethoxysilan und eine Spatelspitze Salicylsäure wurden mit Ethylacetat auf 50 Gewichts-% Feststoffgehalt verdünnt, die erhaltene Lösung mittels eines Pinsels in dünnster Schicht auf eine mit Heptan vorgereinigte Glasplatte (Floatglas; Firma Rocholl, Schönbrunn, Deutschland) aufgetragen und im Standardklima (23 ˚C, 50% relative Feuchtigkeit) stehen lassen. Nach 70 Minuten war ein klebefreier, glänzend-transparenter und gut haftender Film mit vollständig trockener Oberfläche entstanden. Die übrig bleibende, nicht applizierte Lösung liess sich in einem klimadichten Gefäss während mehreren Wochen ohne signifikante Viskositätserhöhung lagern.

Das Polyurethanpolymer ***PP6*** wurde wie folgt hergestellt:

1 g Polyoxypropylen-Diol (Desmophen® 1112 BD, Bayer; OH-Zahl 112 mg KOH/g), 4.06 g IPDI-Trimerisat (Vestanat® T 1890/100, Degussa) und 9.4 g Ethylacetat wurden nach bekanntem Verfahren bei 60 ˚C zu einem Polyurethanpolymeren mit einem titrimetrisch bestimmten Gehalt an freien Isocyanat-Gruppen von 3.94 Gewichts-% umgesetzt.

**Patentansprüche**

**1.** Zusammensetzung enthaltend

(i) mindestens ein Isocyanat-haltiges Polyurethanpolymer **P**, welches aus mindestens einem Polyisocyanat und mindestens einem Polyol hergestellt wird;
und
(ii) mindestens eine Aldimin-haltige Verbindung der Formel (I)

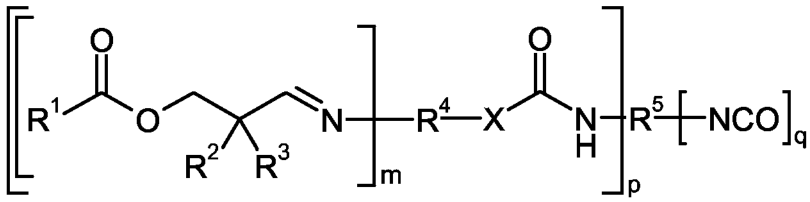 (I)

wobei

m für eine ganze Zahl von 1 bis 4 steht,
p für eine ganze Zahl von 1 bis 6 steht und
q für eine ganze Zahl von 0 bis 5 steht
mit der Massgabe, dass p+q = 2 bis 6 ist;

und wobei

$R^1$ entweder
für einen einwertigen Kohlenwasserstoffrest mit 6 bis 30 C-Atomen, welcher gegebenenfalls mindestens ein Heteroatom, insbesondere in Form von Ether-Sauerstoff, aufweist, steht,
oder
für einen Substituenten der Formel (II) steht

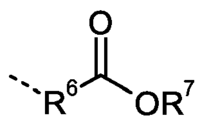 (II)

wobei

$R^6$ für einen zweiwertigen Kohlenwasserstoffrest mit 2 bis 20 C-Atomen, welcher gegebenenfalls mindestens ein Heteroatom, insbesondere in Form von Ether-Sauerstoff, aufweist, steht,
und
$R^7$ für einen einwertigen Kohlenwasserstoffrest mit 1 bis 20 C-Atomen steht;

und wobei
$R^2$ und $R^3$ entweder,
unabhängig voneinander, je für einen einwertigen Kohlenwasserstoffrest mit 1 bis 12 C-Atomen stehen;
oder
zusammen einen zweiwertigen Kohlenwasserstoffrest mit 4 bis 20 C-Atomen bilden, der Teil eines, gegebenenfalls substituierten, carbocyclischen Rings mit 5 bis 8, bevorzugt 6, C-Atomen ist;
und wobei
$R^4$ für einen (m+1)-wertigen Kohlenwasserstoffrest mit 2 bis 12 C-Atomen, welcher gegebenenfalls mindestens ein Heteroatom, insbesondere in Form von Ether-Sauerstoff oder tertiärem Amin-Stickstoff, enthält, steht;
und wobei $R^5$ entweder
für einen (p+q)-wertigen organischen, gegebenenfalls Heteroatome enthaltenden Rest, wie er durch Entfernung von p+q NCO-Gruppen aus $R^5$-$[NCO]_{p+q}$ erhalten wird, steht
oder
für N, $NR^{14}$, O, OC(O)O, Si, $P(O)O_3$ oder $SO_2$ steht,
wobei

$R^{14}$ für einen einwertigen Kohlenwasserstoffrest mit 1 bis 20 C-Atomen steht;

und wobei
X für O, S oder N-$R^8$ steht,
wobei

$R^8$ entweder
für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureestergruppe aufweist, steht,
oder
für einen Substituenten der Formel (III) steht

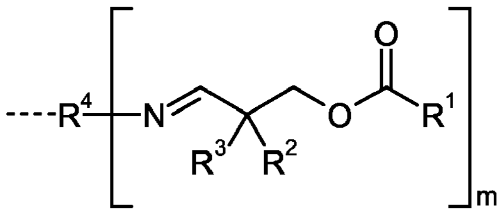 (III).

2. Zusammensetzung gemäss Anspruch 1, **dadurch gekennzeichnet, dass** $R^2$ und $R^3$ gleich sind und insbesondere je für eine Methylgruppe stehen.

3. Zusammensetzung gemäss Anspruch 1 oder 2, **dadurch gekennzeichnet, dass** m = 2 oder 1, insbesondere 1, ist.

4. Zusammensetzung gemäss einem der vorhergehenden Ansprüche, **dadurch gekennzeichnet, dass** X entweder für einen einwertigen Kohlenwasserstoffrest mit 1 bis 20 C-Atomen,
oder für N-$R^8$ steht und $R^8$ für einen einwertigen Kohlenwasserstoffrest der Formel (IX) oder (IX') steht

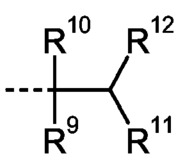 (IX) 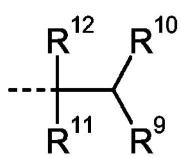 (IX')

wobei $R^9$ für einen Rest, welcher ausgewählt ist aus der Gruppe bestehend aus $-COOR^{13}$, -CN, $-NO_2$, $-PO(OR^{13})_2$, $-SO_2R^{13}$ und $-SO_2OR^{13}$, steht; $R^{10}$ für ein Wasserstoffatom oder einen Rest ausgewählt aus der Gruppe bestehend aus $-R^{13}$, $-COOR^{13}$ und $-CH_2COOR^{13}$steht und
$R^{11}$ und $R^{12}$ unabhängig voneinander für ein Wasserstoffatom oder einen Rest ausgewählt aus der Gruppe bestehend aus $-R^{13}$, $-COOR^{13}$ und -CN, wobei $R^{13}$ für einen einwertigen Kohlenwasserstoffrest mit 1 bis 20 C-Atomen steht.

5. Zusammensetzung gemäss einem der vorhergehenden Ansprüche, **dadurch gekennzeichnet, dass** X für O oder S steht.

6. Zusammensetzung gemäss einem der vorhergehenden Ansprüche, **dadurch gekennzeichnet, dass** die Verbindung der Formel (I) durch die Umsetzung eines Aldimins der Formel (XI) mit einem Polyisocyanat D der Formel (XII) hergestellt wird

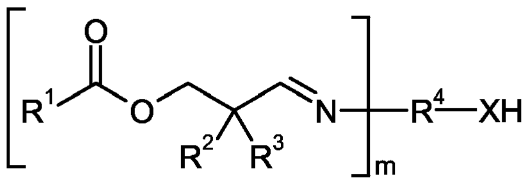

(XI)

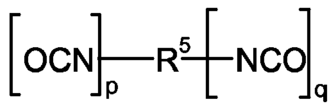

(XII).

**7.** Zusammensetzung gemäss Anspruch 6, **dadurch gekennzeichnet, dass** das Aldimin der Formel (XI) in einem Verhältnis von einem Molequivalent aktiven Wasserstoff des Aldimins auf ein Molequivalent Isocyanatgruppen des Polyisocyanates D eingesetzt wird.

**8.** Zusammensetzung gemäss Anspruch 6, **dadurch gekennzeichnet, dass** das Aldimin der Formel (XI) in einem Verhältnis von weniger als einem Molequivalent aktiven Wasserstoff des Aldimins auf ein Molequivalent Isocyanatgruppen des Polyisocyanates D eingesetzt wird.

**9.** Zusammensetzung gemäss einem der vorhergehenden Ansprüche, **dadurch gekennzeichnet, dass** das Polyisocyanat, welches für die Herstellung des Polyurethanpolymers P verwendet wird, MDI, HDI, TDI oder IPDI ist.

**10.** Zusammensetzung gemäss einem der vorhergehenden Ansprüche, **dadurch gekennzeichnet, dass** die Zusammensetzung zusätzlich mindestens ein Polymer enthält, welches Organoalkoxysilangruppen aufweist.

**11.** Zusammensetzung gemäss einem der vorhergehenden Ansprüche, **dadurch gekennzeichnet, dass** die Gewichtssumme aller Aldimin-haltigen Verbindungen der Formel (I) einen Wert von 0.1 bis 30 Gew.-%, bevorzugt 0.5 bis 20 Gew.-%, insbesondere 1 bis 10 Gew.-%, bezogen auf das Gewicht der Zusammensetzung, beträgt.

**12.** Zusammensetzung gemäss einem der Ansprüche 1 bis 10, **dadurch gekennzeichnet, dass** der Index q für einen Wert > 0 steht.

**13.** Zusammensetzung gemäss Anspruch 12, **dadurch gekennzeichnet, dass** die Gewichtssumme aller Aldiminhaltigen Verbindungen der Formel (I) einen Wert von 0.1 bis 100 Gew.-%, insbesondere 30 bis 100 Gew.-%, bezogen auf das Gewicht der Zusammensetzung, beträgt.

**14.** Zusammensetzung gemäss einem der vorhergehenden Ansprüche, **dadurch gekennzeichnet, dass** das molare Verhältnis zwischen Aldimino- und Isocyanatgruppen in der Zusammensetzung 0.1 - 1.1, bevorzugt 0.25 - 1.0, besonders bevorzugt 0.5 - 1.0, beträgt.

**15.** Ausgehärtete Zusammensetzung erhalten durch die Reaktion von Wasser mit einer Zusammensetzung gemäss einem der Ansprüche 1-14.

**16.** Verwendung einer Zusammensetzung gemäss einem der Ansprüche 1 bis 14 als Klebstoff, Dichtstoff oder Beschichtung.

**17.** Verwendung gemäss Anspruch 16, **dadurch gekennzeichnet, dass** die Verwendung im Innern von Fahrzeugen oder Gebäuden erfolgt.

**18.** Verwendung gemäss Anspruch 16 oder 17 als Klebstoff, Dichtstoff oder Beschichtung in der industriellen Fertigung oder Reparatur oder im Tief- oder Hochbau oder Innenausbau von Transportmitteln oder Bauwerken.

**19.** Verfahren der Verklebung von Substraten S1 und S2 umfassend die Schritte

- Applikation einer Zusammensetzung gemäss einem der Ansprüche 1 bis 14 auf die Oberfläche des Substrates **S1,**
- Kontaktieren der Oberfläche des Substrates S2 mit der Zusammensetzung, welche auf dem Substrat S1 angeordnet ist,
- Aushärtung der Zusammensetzung durch Kontakt mit Feuchtigkeit,

wobei die Substrate **S1** und **S2** gleich oder verschieden voneinander sind.

**20.** Verfahren des Abdichtens umfassend die Schritte

- Applikation einer Zusammensetzung gemäss einem der Ansprüche 1 bis 14 zwischen die Oberflächen eines Substrates **S1** und eines Substrates **S2,**
- Aushärtung der Zusammensetzung durch Kontakt mit Feuchtigkeit,

wobei die Substrate **S1** und **S2** gleich oder verschieden voneinander sind.

**21.** Verfahren gemäss Anspruch 19 oder 20, **dadurch gekennzeichnet, dass** mindestens eines der Substrate **S1** oder **S2** ein(e) Glas, Glaskeramik, Beton, Mörtel, Backstein, Ziegel, Gips, Naturstein wie Granit oder Marmor; Metall oder Legierung wie Aluminium, Stahl, Buntmetall, verzinktes Metall; organisches Substrat wie Holz, Kunststoff wie PVC, Polycarbonate, PMMA, Polyester, Epoxidharz; beschichtetes Substrat wie pulverbeschichtetes Metall oder Legierung; Farbe oder Lack, insbesondere Automobillack, ist.

**22.** Verklebter Artikel, welcher mittels eines Verfahrens zur Verklebung gemäss Anspruch 19 oder 21 hergestellt wird.

**23.** Verklebter Artikel gemäss Anspruch 22, **dadurch gekennzeichnet, dass** der Artikel ein Transportmittel, insbesondere ein Fahrzeug zu Wasser oder zu Lande, bevorzugt ein Automobil, ein Bus, ein Lastkraftwagen, ein Zug oder ein Schiff, oder ein Teil davon, ist.

**24.** Abgedichteter Artikel, welcher mittels eines Verfahrens zur Abdichtung gemäss einem der Ansprüche 20 oder 21 hergestellt wird.

**25.** Abgedichteter Artikel gemäss Anspruch 24, **dadurch gekennzeichnet, dass** der Artikel ein Transportmittel oder ein Bauwerk ist.

Europäisches Patentamt

# EUROPÄISCHER RECHERCHENBERICHT

Nummer der Anmeldung
EP 05 10 9112

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | US 6 136 942 A (PFENNINGER ET AL) 24. Oktober 2000 (2000-10-24) * das ganze Dokument * ----- | 1-25 | C08G18/32 C08G18/10 C09D175/04 C09K3/10 C09J175/04 |
| A | EP 1 384 735 A (SIKA TECHNOLOGY AG) 28. Januar 2004 (2004-01-28) * das ganze Dokument * ----- | 1-25 | |
| A | EP 1 524 282 A (SIKA TECHNOLOGY AG) 20. April 2005 (2005-04-20) * das ganze Dokument * ----- | 1-25 | |
| A | EP 0 469 751 A (MITSUI TOATSU CHEMICALS, INC) 5. Februar 1992 (1992-02-05) * das ganze Dokument * | 1-25 | |
| A,D | & US 5 087 661 A (AOKI ET AL) 11. Februar 1992 (1992-02-11) * das ganze Dokument * ----- | 1-25 | |

RECHERCHIERTE SACHGEBIETE (IPC)

C08G
C09D
C09K
C09J

Der vorliegende Recherchenbericht wurde für alle Patentansprüche erstellt

2

| Recherchenort | Abschlußdatum der Recherche | Prüfer |
|---|---|---|
| München | 17. Februar 2006 | Puttins, U |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 05 10 9112

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2006

| Im Recherchenbericht angeführtes Patentdokument | Datum der Veröffentlichung | Mitglied(er) der Patentfamilie | Datum der Veröffentlichung |
|---|---|---|---|
| US 6136942 A | 24-10-2000 | AT 274006 T | 15-09-2004 |
| | | CA 2267702 A1 | 02-10-1999 |
| | | DE 59910235 D1 | 23-09-2004 |
| | | EP 0947529 A1 | 06-10-1999 |
| | | ES 2227924 T3 | 01-04-2005 |
| | | JP 11322893 A | 26-11-1999 |
| EP 1384735 A | 28-01-2004 | AU 2003251462 A1 | 23-02-2004 |
| | | BR 0312965 A | 14-06-2005 |
| | | CA 2493600 A1 | 12-02-2004 |
| | | CN 1678653 A | 05-10-2005 |
| | | WO 2004013200 A1 | 12-02-2004 |
| | | JP 2005533916 T | 10-11-2005 |
| EP 1524282 A | 20-04-2005 | WO 2005037885 A1 | 28-04-2005 |
| EP 0469751 A | 05-02-1992 | DE 69109762 D1 | 22-06-1995 |
| | | DE 69109762 T2 | 21-12-1995 |
| | | KR 9706961 B1 | 01-05-1997 |
| | | US 5087661 A | 11-02-1992 |
| US 5087661 A | 11-02-1992 | DE 69109762 D1 | 22-06-1995 |
| | | DE 69109762 T2 | 21-12-1995 |
| | | EP 0469751 A1 | 05-02-1992 |
| | | KR 9706961 B1 | 01-05-1997 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3420800 A
- US 4469831 A
- US 4853454 A
- US 5087661 A
- WO 2004013200 A1
- US 4108842 A
- US 4404379 A
- US 6136942 A
- US 3632557 A
- EP 0403921 B1
- US 3971751 A
- US 6207766 B
- US 4345053 A
- US 5990257 A
- WO 2004056905 A1

### In der Beschreibung aufgeführte Nicht-Patentliteratur

- **HOUBEN-WEYL.** Methoden der organischen Chemie. vol. VIII, 516-528